# EUROPEAN PATENT APPLICATION

(11) **EP 4 250 800 A1**
(43) Date of publication of application: **27.09.2023**
(21) Application number: 21902696.0
(22) Date of filing: 09.12.2021
(51) Int. Cl.: H04W 24/02, H04W 76/27

(54) **COMMUNICATION METHOD, APPARATUS AND SYSTEM**

(30) Priority: 11.12.2020 CN 202011447020
(71) Applicant: Huawei Technologies Co., Ltd., Shenzhen, Guangdong 518129 (CN)
(72) Inventor: LIU, Zhe, Shenzhen, Guangdong 518129 (CN); PENG, Chenghui, Shenzhen, Guangdong 518129 (CN); WU, Jianjun, Shenzhen, Guangdong 518129 (CN)
(74) Representative: Gill Jennings & Every LLP
(86) International application number: PCT/CN2021/136873
(87) International publication number: WO 2022/121991

(57) **Abstract**

This application provides a communication method, apparatus, and system. In the method, a first terminal device sends request information including a first task to a first network function entity. After receiving the request information of the first task, the first network function entity may manage the first task, to be specific, allocate at least one first node for executing a subtask of the first task, and send configuration information of a subtask corresponding to each first node. The first node executes the subtask of the first task corresponding to the first node based on the configuration information of the subtask, to implement a task-centric communication mode. In addition, when a plurality of first nodes execute subtasks of the first task, task execution efficiency can be improved, thereby improving task service efficiency of the communication system.

## Description

### CROSS-REFERENCE TO RELATED APPLICATIONS

This application claims priority to Chinese Patent Application No. 202011447020.5, filed with the China National Intellectual Property Administration on December 11, 2020 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

With dense deployment of high-frequency stations such as millimeter wave stations, popularization of diverse terminals, and development of endogenous intelligence in networks, more terminal devices such as handheld terminals and in-vehicle terminals are equipped with sensors. A future communication mode is to be a "connection + perception" mode. Various perception tasks may become mainstream services on future networks.

However, a communication mode of an existing 5^{th} generation (5th generation, 5G) network is developed based on a conventional voice service, and is a point-to-point connection-oriented single communication mode between terminals or between terminals and servers, and may no longer be applicable.

### SUMMARY

Embodiments of this application provide a communication method, apparatus, and system, to implement a task-centric communication mode.

To achieve the foregoing objective, the following technical solutions are used in embodiments of this application.

According to a first aspect, a communication method is provided. The method includes: A first network function entity receives first information including request information of a first task from a first terminal device, and sends configuration information of at least one second task, where the second task is a subtask of the first task, the configuration information of the second task is for configuring an execution resource corresponding to the second task, and the second task corresponds to a first node.

Based on this solution, after receiving the request information of the task, the first network function entity may send configuration information of a subtask of the first task corresponding to at least one first node, so that the first node executes the subtask of the first task based on a configuration of the first network function entity. When there are a plurality of first nodes, the plurality of first nodes finally cooperate to complete the first task. In other words, in this application, the first network function entity manages the first task, to implement the task-centric communication mode.

In some possible designs, the first terminal device is a terminal device served by a first access network device; and that a first network function entity receives first information from a first terminal device includes: The first network function entity receives the first information from the first terminal device through the first access network device. Based on this possible design, the first network function entity can obtain the first information through the first access network device.

In some possible designs, the communication method further includes: The first network function entity receives an execution result of a second task corresponding to at least one first node from a second access network device, where the at least one first node includes the second access network device and/or a second terminal device, and the second terminal device is a terminal device served by the second access network device; and the first network function entity sends the execution result of the second task corresponding to the at least one first node to the first terminal device. Based on this possible design, the first network function entity can provide a data exchange service for the first terminal device, so that the first terminal device obtains the execution result of the task.

In some possible designs, that the first network function entity sends configuration information of at least one second task includes: The first network function entity sends the configuration information of the second task corresponding to the at least one first node to the second access network device, where the at least one first node includes the second access network device and/or the second terminal device, and the second terminal device is a terminal device served by the second access network device. Based on this possible design, the second access network device can obtain the configuration information of the second task corresponding to the second access network device, to execute the second task corresponding to the second access network device, or the second access network device can obtain configuration information of a second task corresponding to the second terminal device served by the second access network device. Therefore, the second access network device can send the configuration information of the second task corresponding to the second terminal device to the second terminal device, so that the second task corresponding to the second terminal device is executed.

In some possible designs, that the first network function entity sends configuration information of at least one second task includes: The first network function entity verifies validity of the first task; and sends the configuration information of the at least one second task when the first task is valid. Based on this possible design, task service security can be improved. When the task is valid, the configuration information of the at least one second task is sent. Compared with a solution in which the configuration information of the at least one second task is still sent when validity is not verified but the task is invalid, wastes of unnecessary resources, power consumption, and the like can be reduced.

In some possible designs, the method further includes: The first network function entity obtains node capability information of at least one first node, where the node capability information indicates a task execution capability of the first node. Based on this possible design, the first network function entity can obtain the task execution capability of the first node, which is reference for decomposing the task and determining the first node for executing the task by the first network entity, to improve task management efficiency and reasonableness of the first network function entity, and reduce a task execution delay.

According to a second aspect, a communication method is provided. The method includes: A first terminal device sends first information including request information of a first task to a first network function entity, and receives an execution result of at least one second task, where the second task is a subtask of the first task, and the second task corresponds to a first node.

Based on this solution, the first terminal device sends the request information of the first task to the first network function entity, so that the first network function entity configures a subtask of the first task for at least one first node. When there are a plurality of first nodes, the plurality of first nodes finally cooperate to complete the first task, so that the first terminal device obtains an execution result of the first task. In other words, in this application, the first terminal device initiates the request for the first task to the first network function entity, and the first network function entity manages the first task, to implement the task-centric communication mode.

In some possible designs, the first terminal device is a terminal device served by a first access network device; and that a first terminal device sends first information to a first network function entity includes: The first terminal device sends the first information to the first network function entity through the first access network device. Based on this possible design, the first terminal device can send the first information through the first access network device.

In some possible designs, the first information is transmitted through one or more of the following: a task-type radio resource control RRC container, task-type non-access stratum NAS signaling, or a task-type signaling radio bearer SRB. Based on this possible design, this application provides the task-type RRC container, the task-type NAS signaling, or the task-type SRB for transmitting task-related control information, so that after receiving the task-related control information transmitted through the task-type RRC container, the task-type NAS signaling, or the task-type SRB, the access network device can determine a receiver of the task-related control information, for example, the first network function entity. Therefore, the task-related control information is forwarded to the receiver to ensure a correct transmission direction of the task-related control information, to improve a task success rate.

In some possible designs, that a first terminal device receives an execution result of at least one second task includes: The first terminal device receives the execution result of the second task corresponding to at least one first node from the first access network device, where the first node includes a second access network device and/or a second terminal device, and the second terminal device is a terminal device served by the second access network device.

In some possible designs, that a first terminal device receives an execution result of at least one second task includes: The first terminal device receives the execution result of the second task corresponding to the second terminal device from the second terminal device. Based on this possible design, the first terminal device and the second terminal device can exchange a task execution result on a sidelink.

In some possible designs, the execution result of the second task is mapped to one of the following: a task-type packet data convergence protocol PDCP data protocol data unit, a task-type service data adaptation protocol SDAP data protocol data unit, a task-type data radio bearer DRB, or a task-type quality of service QoS flow. Based on this possible design, this application provides the task-type SDAP data PDU, the task-type PDCP data PDU, the task-type data radio bearer DRB, or the task-type QoS to transmit the task execution result. In this way, the access network device can identify the task execution result and directly send the task execution result to a task requester. Compared with a solution in which an execution result of a node is sent back to a task requester through a DN connected to a core network when a perception task or a computing task is implemented at an application layer, a transmission delay of the task execution result can be reduced, and task service efficiency can be improved.

In some possible designs, that a first terminal device receives an execution result of at least one second task includes: The first terminal device receives the execution result of the at least one second task from the first network function entity. Based on this possible design, the first network function entity can provide a data exchange service for the first terminal device, so that the first terminal device obtains the execution result of the task.

According to a third aspect, a communication method is provided. The method includes: A second terminal device receives configuration information of a second task corresponding to the second terminal device from a second access network device; and then the second terminal device executes the second task corresponding to the second terminal device, and sends an execution result of the second task corresponding to the second terminal device.

Based on this solution, after receiving the configuration information of the second task corresponding to the second terminal device, the second terminal device may execute the second task, and send the execution result of the second task. Finally, a first terminal device obtains the execution result of the second task, to implement the task-centric communication mode.

In some possible designs, the configuration information of the second task corresponding to the second terminal device is transmitted through one or more of the following: a task-type radio resource control RRC container, task-type non-access stratum NAS signaling, or a task-type signaling radio bearer SRB.

In some possible designs, the method further includes: The second terminal device receives third information from the second access network device; and determines a transmission link for the execution result of the second task corresponding to the second terminal device based on the third information.

In some possible designs, the transmission link is a sidelink between the second terminal device and the first terminal device; and that a second terminal device sends an execution result of the second task corresponding to the second terminal device includes: The second terminal device sends the execution result of the second task corresponding to the second terminal device to the first terminal device.

In some possible designs, the transmission link is an air interface link between the second terminal device and the second access network device; and that a second terminal device sends an execution result of the second task corresponding to the second terminal device includes: The second terminal device sends the execution result of the second task corresponding to the second terminal device to the second access network device.

In some possible designs, the execution result of the second task corresponding to the second terminal device is mapped to one of the following: a task-type packet data convergence protocol PDCP data protocol data unit, a task-type service data adaptation protocol SDAP data protocol data unit, a task-type data radio bearer DRB, or a task-type quality of service QoS flow.

For technical effects brought by any possible design of the third aspect, refer to technical effects brought by the corresponding design of the second aspect. Details are not described herein again.

According to a fourth aspect, a communication method is provided. The method includes: A second access network device receives second information from a first network function entity, where the second information includes configuration information of a second task corresponding to a second terminal device, and the configuration information of the second task is for configuring an execution resource corresponding to the second task; and the second access network device sends the configuration information of the second task corresponding to the second terminal device to the second terminal device.

Based on this solution, after receiving the second information from the first network function entity, the second access network device sends configuration information of a subtask corresponding to the second terminal device to the second terminal device, so that the second terminal device executes the subtask of a first task based on a configuration of the first network function entity. In other words, in this application, the first network function entity manages the first task, and a first access network device cooperatively transmits the configuration information of the task, to implement the task-centric communication mode.

In some possible designs, the configuration information of the second task corresponding to the second terminal device is transmitted through one or more of the following: a task-type radio resource control RRC container, task-type non-access stratum NAS signaling, or a task-type signaling radio bearer SRB.

In some possible designs, the method further includes: The second access network device sends third information to the second terminal device, where the third information is for determining a transmission link for an execution result of the second task corresponding to the second terminal device.

In some possible designs, the transmission link is a sidelink between the second terminal device and a first terminal device.

In some possible designs, the transmission link is an air interface link between the second terminal device and the second access network device.

In some possible designs, the execution result of the second task corresponding to the second terminal device is mapped to one of the following: a task-type packet data convergence protocol PDCP data protocol data unit, a task-type service data adaptation protocol SDAP data protocol data unit, a task-type data radio bearer DRB, or a task-type quality of service QoS flow.

In some possible designs, the method further includes: The second access network device receives first information from the first terminal device, and sends the first information to the first network function entity, where the first information includes request information of the first task, and the second task is a subtask of the first task.

In some possible designs, the first information is transmitted through one or more of the following: a radio resource control RRC container, non-access stratum NAS signaling, or a signaling radio bearer SRB.

In some possible designs, the second information further includes configuration information of a second task corresponding to the second access network device.

For technical effects brought by any possible design of the fourth aspect, refer to technical effects brought by the corresponding design of the second aspect or the third aspect. Details are not described herein again.

According to a fifth aspect, a communication method is provided. The method includes: A first access network device receives first information from a first terminal device, and sends the first information to a first network function entity, where the first information includes request information of a first task.

Based on this solution, after receiving configuration information of a subtask of the first task corresponding to each first node from the first network function entity, the first access network device sends, to some or all first nodes, the configuration information of the subtasks corresponding to the first nodes, so that the first nodes execute the subtasks of the first task based on a configuration of the first network function entity. When there are a plurality of first nodes, the plurality of first nodes finally cooperate to complete the first task. In other words, in this application, the first network function entity manages the first task, and a first access network device cooperatively transmits the configuration information of the task, to implement the task-centric communication mode.

In some possible designs, the first information is transmitted through one or more of the following: a task-type radio resource control RRC container, task-type non-access stratum NAS signaling, or a task-type signaling radio bearer SRB.

In some possible designs, the method further includes: receiving an execution result of a second task corresponding to at least one first node from the second access network device, where the second task is a subtask of the first task, the at least one first node includes the second access network device and/or a second terminal device, and the second terminal device is a terminal device served by the second access network device; and sending the execution result of the second task corresponding to the at least one first node to the first terminal device.

In some possible designs, the execution result of the second task corresponding to the at least one first node is mapped to one or more of the following: a task-type packet data convergence protocol PDCP data protocol data unit, a task-type service data adaptation protocol SDAP data protocol data unit, a task-type data radio bearer DRB, or a task-type quality of service QoS flow.

For technical effects brought by any possible design of the fifth aspect, refer to technical effects brought by the corresponding design of the second aspect, the third aspect, or the fourth aspect. Details are not described herein again.

According to a sixth aspect, a communication apparatus is provided, configured to implement the foregoing methods. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

The communication apparatus may be the first network function entity in the first aspect, or an apparatus including the first network function entity, or an apparatus included in the first network function entity, for example, a chip. Alternatively, the communication apparatus may be the first terminal device in the second aspect, or an apparatus including the first terminal device, or an apparatus included in the first terminal device, for example, a chip. Alternatively, the communication apparatus may be the second terminal device in the third aspect, or an apparatus including the second terminal device, or an apparatus included in the second terminal device, for example, a chip. Alternatively, the communication apparatus may be the second access network device in the fourth aspect, or an apparatus including the second access network device, or an apparatus included in the second access network device, for example, a chip. Alternatively, the communication apparatus may be the first access network device in the fifth aspect, or an apparatus including the first access network device, or an apparatus included in the first access network device, for example, a chip.

According to a seventh aspect, a communication apparatus is provided, including a processor and a memory. The memory is configured to store computer instructions. When the processor executes the instructions, the communication apparatus is enabled to perform the method according to any one of the foregoing aspects.

The communication apparatus may be the first network function entity in the first aspect, or an apparatus including the first network function entity, or an apparatus included in the first network function entity, for example, a chip. Alternatively, the communication apparatus may be the first terminal device in the second aspect, or an apparatus including the first terminal device, or an apparatus included in the first terminal device, for example, a chip. Alternatively, the communication apparatus may be the second terminal device in the third aspect, or an apparatus including the second terminal device, or an apparatus included in the second terminal device, for example, a chip. Alternatively, the communication apparatus may be the second access network device in the fourth aspect, or an apparatus including the second access network device, or an apparatus included in the second access network device, for example, a chip. Alternatively, the communication apparatus may be the first access network device in the fifth aspect, or an apparatus including the first access network device, or an apparatus included in the first access network device, for example, a chip.

According to an eighth aspect, a communication apparatus is provided, including an interface circuit and a logic circuit. The interface circuit may be a code/data read/write interface circuit, and the interface circuit is configured to obtain input information and/or output output information. The logic circuit is configured to perform the method according to any one of the foregoing aspects, and process and/or generate the output data based on the input information.

In some possible designs, the communication apparatus may be the first network function entity in the first aspect, or an apparatus including the first network function entity, or an apparatus included in the first network function entity, for example, a chip. In this case, the input information includes the first information, and the output information includes the configuration information of the at least one second task.

Optionally, the input information and the output information may further include configuration information of a second task corresponding to at least one first node, the at least one first node includes the second access network device and/or the second terminal device, and the second terminal device is a terminal device served by the second access network device.

Optionally, the input information may further include node capability information of at least one first node, where the node capability information indicates a task execution capability of the first node.

In some possible designs, the communication apparatus may be the first terminal device in the second aspect, or an apparatus including the first terminal device, or an apparatus included in the first terminal device, for example, a chip. In this case, the input information includes the execution result of the at least one second task, and the output information includes the first information.

In some possible designs, the communication apparatus may be the second terminal device in the third aspect, an apparatus including the second terminal device, or an apparatus included in the second terminal device, for example, a chip. In this case, the input information includes the configuration information of the second task corresponding to the second terminal device, and the output information includes the execution result of the second task corresponding to the second terminal device.

In some possible designs, the communication apparatus may be the second access network device in the fourth aspect, or an apparatus including the second access network device, or an apparatus included in the second access network device, for example, a chip. In this case, the input information includes the second information, and the output information includes the configuration information of the second task corresponding to the second terminal device.

In some possible designs, the communication apparatus may be the first access network device in the fifth aspect, or an apparatus including the first access network device, or an apparatus included in the first access network device, for example, a chip. In this case, both the input information and the output information include the first information.

Optionally, the input information and the output information may further include the execution result of the second task corresponding to the at least one first node. The at least one first node includes the second access network device and/or the second terminal device, and the second terminal device is a terminal device served by the second access network device.

According to a ninth aspect, a communication apparatus is provided, including at least one processor, where the processor is configured to execute a computer program or instructions stored in a memory, so that the communication apparatus performs the method according to any one of the foregoing aspects. The memory may be coupled to the processor, or may be independent of the processor.

The communication apparatus may be the first network function entity in the first aspect, or an apparatus including the first network function entity, or an apparatus included in the first network function entity, for example, a chip. Alternatively, the communication apparatus may be the first terminal device in the second aspect, or an apparatus including the first terminal device, or an apparatus included in the first terminal device, for example, a chip. Alternatively, the communication apparatus may be the second terminal device in the third aspect, or an apparatus including the second terminal device, or an apparatus included in the second terminal device, for example, a chip. Alternatively, the communication apparatus may be the second access network device in the fourth aspect, or an apparatus including the second access network device, or an apparatus included in the second access network device, for example, a chip. Alternatively, the communication apparatus may be the first access network device in the fifth aspect, or an apparatus including the first access network device, or an apparatus included in the first access network device, for example, a chip.

According to a tenth aspect, a computer-readable storage medium is provided. The computer-readable storage medium stores instructions. When the instructions are run on a communication apparatus, the communication apparatus is enabled to perform the method according to any one of the foregoing aspects.

The communication apparatus may be the first network function entity in the first aspect, or an apparatus including the first network function entity, or an apparatus included in the first network function entity, for example, a chip. Alternatively, the communication apparatus may be the first terminal device in the second aspect, or an apparatus including the first terminal device, or an apparatus included in the first terminal device, for example, a chip. Alternatively, the communication apparatus may be the second terminal device in the third aspect, or an apparatus including the second terminal device, or an apparatus included in the second terminal device, for example, a chip. Alternatively, the communication apparatus may be the second access network device in the fourth aspect, or an apparatus including the second access network device, or an apparatus included in the second access network device, for example, a chip. Alternatively, the communication apparatus may be the first access network device in the fifth aspect, or an apparatus including the first access network device, or an apparatus included in the first access network device, for example, a chip.

According to an eleventh aspect, a computer program product including instructions is provided. When the computer program product runs on a communication apparatus, the communication apparatus is enabled to perform the method according to any one of the foregoing aspects.

The communication apparatus may be the first network function entity in the first aspect, or an apparatus including the first network function entity, or an apparatus included in the first network function entity, for example, a chip. Alternatively, the communication apparatus may be the first terminal device in the second aspect, or an apparatus including the first terminal device, or an apparatus included in the first terminal device, for example, a chip. Alternatively, the communication apparatus may be the second terminal device in the third aspect, or an apparatus including the second terminal device, or an apparatus included in the second terminal device, for example, a chip. Alternatively, the communication apparatus may be the second access network device in the fourth aspect, or an apparatus including the second access network device, or an apparatus included in the second access network device, for example, a chip. Alternatively, the communication apparatus may be the first access network device in the fifth aspect, or an apparatus including the first access network device, or an apparatus included in the first access network device, for example, a chip.

According to a twelfth aspect, a communication apparatus (where for example, the communication apparatus may be a chip or a chip system) is provided. The communication apparatus includes a processor, configured to implement the function in any one of the foregoing aspects. In a possible design, the communication apparatus further includes a memory, and the memory is configured to store necessary program instructions and data. When the communication apparatus is the chip system, the communication apparatus may include a chip, or may include a chip and another discrete component.

For technical effects brought by any design manner of the sixth aspect to the twelfth aspect, refer to technical effects brought by different design manners in the first aspect, the second aspect, the third aspect, the fourth aspect, or the fifth aspect. Details are not described herein again.

According to a thirteenth aspect, a communication system is provided. The communication system includes one or more of the first terminal device according to the foregoing aspect, the first network function entity according to the foregoing aspect, the second access network device according to the foregoing aspect, and the second terminal device according to the foregoing aspect.

### BRIEF DESCRIPTION OF DRAWINGS

FIG. 1a is a schematic diagram of a 5G network architecture according to an embodiment of this application;
FIG. 1b is a schematic diagram of mapping between an SRB and a DRB according to an embodiment of this application;
FIG. 2 is a schematic diagram of a scenario of a perception task according to an embodiment of this application;
FIG. 3 is a schematic diagram of "connection + perception"-oriented control logic according to an embodiment of this application;
FIG. 4 is a schematic diagram of a structure of a communication system according to an embodiment of this application;
FIG. 5a is a schematic diagram of a structure of another communication system according to an embodiment of this application;
FIG. 5b is a schematic diagram of a structure of still another communication system according to an embodiment of this application;
FIG. 6 is a schematic diagram of a structure of a communication apparatus according to an embodiment of this application;
FIG. 7a is a schematic diagram of module division of a first network function entity according to an embodiment of this application;
FIG. 7b is a schematic diagram of module division of another first network function entity according to an embodiment of this application;
FIG. 8 is a schematic diagram of logical division of an access network device according to an embodiment of this application;
FIG. 9 is a schematic diagram of logical division of another access network device according to an embodiment of this application;
FIG. 10 is a schematic diagram of a control plane protocol stack architecture according to an embodiment of this application;
FIG. 11 is a schematic diagram of a task plane protocol stack architecture according to an embodiment of this application;
FIG. 12a is a schematic diagram 1 of mapping a task execution result according to an embodiment of this application;
FIG. 12b is a schematic diagram 2 of mapping a task execution result according to an embodiment of this application;
FIG. 12c is a schematic diagram 3 of mapping a task execution result according to an embodiment of this application;
FIG. 12d is a schematic diagram 4 of mapping a task execution result according to an embodiment of this application;
FIG. 13 is a schematic diagram of a protocol stack architecture of an access network device according to an embodiment of this application;
FIG. 14 is a schematic flowchart 1 of a communication method according to an embodiment of this application;
FIG. 15 is a schematic flowchart 2 of a communication method according to an embodiment of this application;
FIG. 16 is a schematic flowchart 3 of a communication method according to an embodiment of this application;
FIG. 17 is a schematic flowchart 4 of a communication method according to an embodiment of this application;
FIG. 18 is a schematic flowchart 5 of a communication method according to an embodiment of this application;
FIG. 19 is a schematic flowchart 6 of a communication method according to an embodiment of this application;
FIG. 20 is a schematic diagram of a structure of a first network function entity according to an embodiment of this application;
FIG. 21 is a schematic diagram of a structure of a first terminal device according to an embodiment of this application;
FIG. 22 is a schematic diagram of a structure of a second access network device according to an embodiment of this application;
FIG. 23 is a schematic diagram of a structure of a first access network device according to an embodiment of this application; and
FIG. 24 is a schematic diagram of a structure of a second terminal device according to an embodiment of this application.

### DESCRIPTION OF EMBODIMENTS

To facilitate understanding of the technical solutions in embodiments of this application, a related technology in this application is first briefly described as follows.

### 1. 5G network architecture:

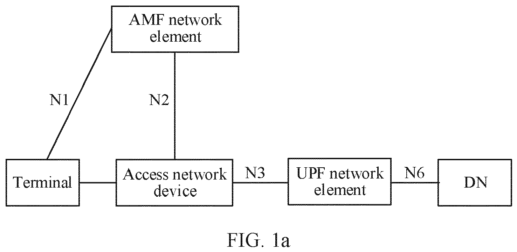

FIG. 1a is a schematic diagram of a system architecture of a 5G network. The system architecture includes a terminal, an access network device, an access and mobility management function (access and mobility management function, AMF) network element, a user plane function (user plane function, UPF) network element, and a data network (data network, DN). Certainly, other function network elements may be further included, for example, a session management function (session management function, SMF) network element and a unified data management (unified data management, UDM) network element.

A next generation (next generation, N) network interface 1 (namely, an N1 interface) is a reference point between the terminal and the AMF network element, and is used by the terminal and the AMF network element to exchange control plane signaling, for example, non-access-stratum (non-access-stratum, NAS) signaling. An N2 interface is a reference point between the access network device and the AMF network element, and is configured to send a NAS message, a next generation application protocol (next generation application protocol, NGAP) message, and the like. An N3 interface is a reference point between the access network device and the UPF network element, and is used by the access network device and the UPF network element to exchange user plane data and the like. An N6 interface is a reference point between the UPF network element and the DN, and is used by the UPF network element and the DN to exchange user plane data and the like.

### 2. Non-access-stratum (non-access-stratum, NAS) signaling, and radio resource control (radio resource control, RRC) container (container):

Generally, NAS signaling is signaling that does not need to be processed by the access network device, and may be classified into a plurality of types of NAS signaling based on different content, for example, mobility management NAS (NAS-mobility management, NAS-MM) signaling, session management NAS (NAS-session management, NAS-SM) signaling, and short message service NAS (NAS-short message service, NAS-SMS) signaling.

After receiving NAS signaling from a terminal device, the access network device forwards the NAS signaling to the AMF network element, and then the AMF network element performs subsequent processing, for example, forwards the NAS-SM signaling to the SMF network element, parses the NAS-MM signaling, and performs processing.

The RRC container is for transmitting an RRC information element in an RRC message, and may be classified into a plurality of types based on different types of transmitted information elements. For example, an nas-Container is for transparently transmitting NAS signaling, and a ue-Capability RAT-Container is for transmitting 3G/4G/5G capability information supported by the terminal device.

### 3. Signaling radio bearer (signaling radio bearer, SRB), and data radio bearer (data radio bearer, DRB):

A radio bearer (radio bearer, RB) describes a transmission channel between two layers of protocols.

The SRB is for transmitting an RRC message. An SRB0, an SRB1, and an SRB2 are defined in an existing standard. The SRB0 carries RRC signaling before an RRC connection is established, a transmission mode (Transmission Mode, TM) is used at an RLC layer, and the signaling is mapped to a common control channel (common control channel, CCCH) for transmission. The SRB 1 is for carrying RRC signaling after the RRC connection is successfully established and NAS signaling before the SRB2 is established, an acknowledged mode (acknowledged mode, AM) is used at the RLC layer, and the signaling is mapped to a dedicated control channel (dedicated control channel, DCCH) for transmission. The SRB2 carries NAS signaling, the AM mode is used at the RLC layer, and the signaling is mapped to the DCCH logical channel for transmission. The priority of the SRB2 is lower than that of the SRB1.

A DRB is for connection-oriented service data transmission. In a new radio (new radio, NR) system, a maximum of 32 DRB s may be simultaneously established between one terminal device and one access network device based on different quality of service (quality of service, QoS).

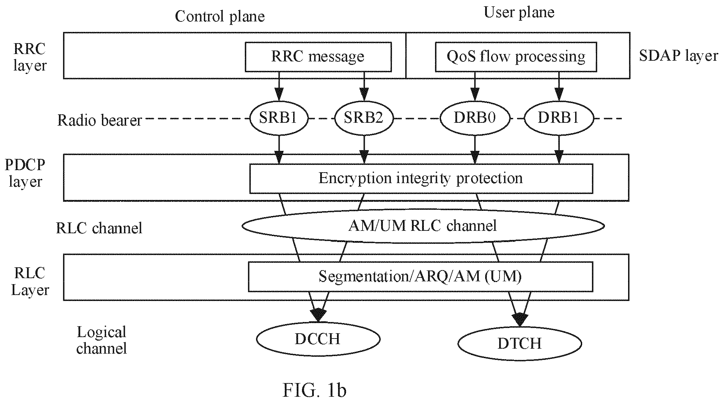

For example, FIG. 1b shows a downlink wireless protocol architecture of NR, and shows related information of an SRB and a DRB. SDAP refers to a service data adaptation protocol (service data adaptation protocol, SDAP), PDCP refers to a packet data convergence protocol (packet data convergence protocol, PDCP), and RLC refers to radio link control (radio link control, RLC). DTCH refers to a dedicated traffic channel (dedicated traffic channel, DTCH), ARQ refers to an automatic repeat request (automatic repeat request, ARQ), AM refers to an acknowledged mode (acknowledged mode, AM), and UM refers to an unacknowledged mode (unacknowledged mode, UM).

### 4. Communication requirements and communication scenarios of a 6^{th} generation (6th generation, 6G) system:

As 5G standardization becomes increasingly mature, the industry starts research on technologies related to the 6G communication system. Compared with the 5G system, the 6G system has the following new communication requirements and communication scenarios:

Station types are diversified and locations change rapidly in real time - sky, earth, and sea (de-cellization): A sky, earth, and sea three-dimensional network based on satellites, uncrewed aerial vehicles, and maritime communication platforms enables locations to change rapidly in real time.

Diversified terminal types and more flexible terminal connections - everything as you like (terminal collaboration): Massive connections in the super Internet of Things (internet of things, IOT) (for example, the Internet of Things, Internet of Vehicles, industry, and medical care) require more flexible terminal connections.

Network intelligence, endogenous network intelligence - endogenous intelligence (intelligent in-depth edge): Endogenous network intelligence enables network autonomous driving, requiring networks to better support real-time artificial intelligence (artificial intelligence, AI) and support deployment of AI applications of users/services in a 6G network.

Holographic omnisense communication requires ultimate performance - holographic omnisense (de-cellization, and collaborative transmission): From 4K resolution, 8K resolution, augmented reality (augmented reality, AR), virtual reality (virtual reality, VR) to holographic omnisense communication, sidelinks between terminals require ultra-low latency, ultra-high reliability, and ultra-large bandwidth. Collaboration between terminals is required to achieve full-sensing ultimate performance.

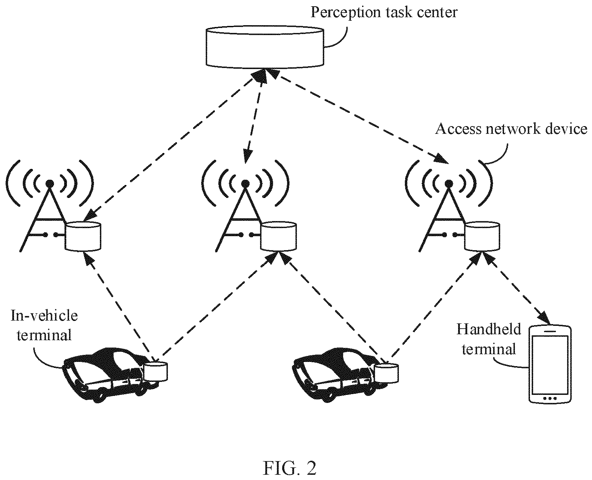

With dense deployment of high-frequency stations such as millimeter wave stations, popularization of diverse terminals, and development of endogenous intelligence in networks, more and more terminal devices such as mobile terminals and in-vehicle terminals are equipped with sensors. A future network is to be a real-time, all-scenario perception network. For example, as shown in FIG. 2, to complete a traffic route planning task, an in-vehicle terminal and a handheld terminal that have a perception capability need to perceive raw data such as a traffic congestion index (for example, a speed or an acceleration), and location information, and report the raw data to a perception task center through an access network device, to provide a real-time traffic route planning service.

Further, as a deep edge computing capability sinks into a wireless network, each node in the wireless network may have a computing capability and is referred to as an edge computing node. Nodes in the wireless network include, for example, a terminal, an active antenna unit (active antenna unit, AAU), a remote radio unit (remote radio unit, RRU), and a baseband processing unit (baseband unit, BBU). In addition, a terminal with a computing capability generally further has some sensors, such as an acceleration sensor and a global positioning capability (global position system, GPS) sensor.

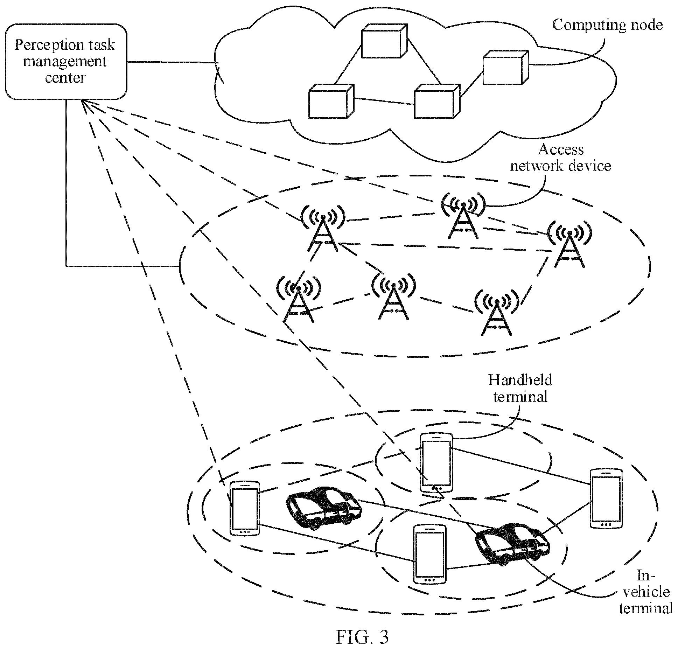

When completing a perception task, the edge computing node may perform certain processing and calculation on raw data perceived by a sensor, to reduce network transmission overheads, and obtain data that facilitates completion of the perception task, to accelerate completion of the perception task. For example, FIG. 3 shows "connection + perception"-oriented control logic according to this application. A system includes a plurality of types of terminals, an independently deployed computing node, and a plurality of access network devices, and a perception task management center controls completion of a perception task.

It is well known that a communication mode of an existing 5G network is developed based on a conventional voice service, and is a communication mode of a single point-to-point connection between terminals or between terminals and servers. An on-demand high-speed pipe service is provided through a connection-oriented control plane and a data plane between an access network device and a core network. If the foregoing communication requirement is implemented through an existing network architecture, low service efficiency and a long delay may be caused. Therefore, the existing 5G network may no longer be suitable for providing perception-based task services.

Based on this, this application provides a communication method, to implement a task-centric communication mode and improve task service efficiency.

The following describes the technical solutions in embodiments of this application with reference to the accompanying drawings in embodiments of this application. In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in descriptions of this application, unless otherwise specified, "a plurality of" means two or more than two.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

A communication method provided in embodiments of this application may be applied to any communication system. The communication system may be a third generation partnership project (third generation partnership project, 3GPP) communication system, for example, a 5G communication system, a 6G communication system, a new radio (new radio, NR) system, or an NR vehicle to everything (vehicle to everything, V2X) system, or another next-generation communication system; or may be a non-3GPP communication system. This is not limited herein.

The communication method provided in embodiments of this application may be applied to various communication scenarios, for example, may be applied to one or more of the following communication scenarios: enhanced mobile broadband (enhanced mobile broadband, eMBB), ultra-reliable low-latency communication (ultra reliable low latency communication, URLLC), machine type communication (machine type communication, MTC), massive machine type communication (massive machine type communications, mMTC), device to device (device to device, D2D), vehicle to everything (vehicle to everything, V2X), vehicle to vehicle (vehicle to vehicle, V2V), and the Internet of Things (internet of things, IoT). The D2D communication may include vehicle-to-vehicle communication, vehicle-to-pedestrian communication, vehicle-to-infrastructure communication, communication between an uncrewed aerial vehicle (unmanned aerial vehicle, UAV) and an uncrewed aerial vehicle, and the like. This is not limited herein.

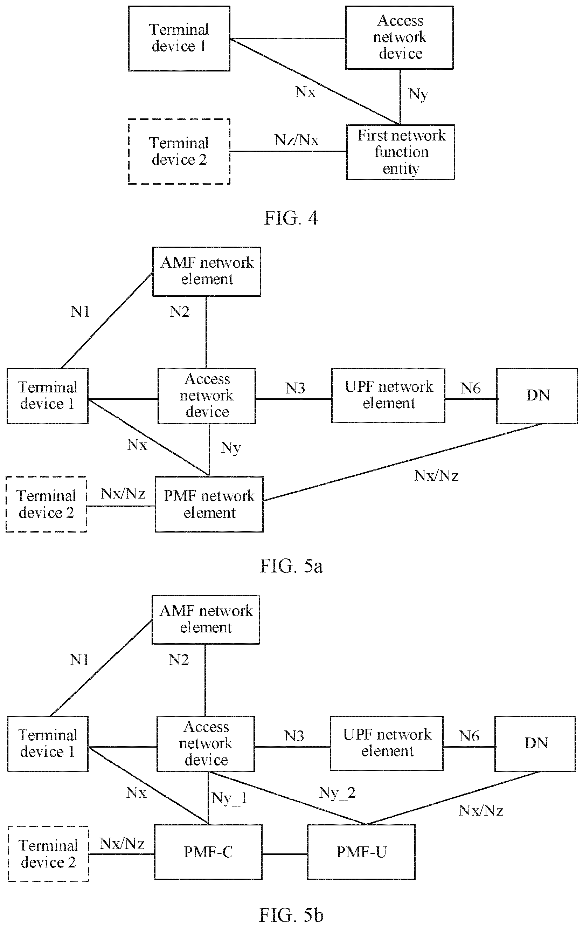

This application provides a communication system. The communication system includes a first network function entity, at least one access network device, and a plurality of terminal devices. For example, an access network device, a terminal device 1, and a terminal device 2 in the communication system are used as an example. FIG. 4 shows a connection relationship between the first network function entity, the access network device, and the terminal devices.

The terminal device in this application is a device configured to implement a wireless communication function, and includes a radio access network (radio access network, RAN) endogenous terminal device (for example, the terminal device 1). Optionally, the terminal device in this application may further include a third-party terminal device (for example, the terminal device 2). The RAN endogenous terminal device is a terminal device that accesses a network through the access network device, and the third-party terminal device is a terminal device that accesses the network in another manner, for example, a terminal device that accesses the network through wireless fidelity (wireless fidelity, Wi-Fi) or a non-3GPP interworking function (Non-3GPP interworking function, N3IWF) entity.

Optionally, when the terminal device is the RAN endogenous terminal device, the terminal device may perform sidelink communication or D2D communication with another terminal device through a sidelink (sidelink, SL), and send data on the SL to another terminal device, for example, send sidelink data on the SL to another terminal through a physical sidelink share channel (physical sidelink share channel, PSSCH), and send sidelink feedback control information (sidelink feedback control information, SFCI) corresponding to the received sidelink data on the SL to another terminal. It should be noted that, in this embodiment of this application, the SL may also be referred to as a direct link, a PC5 interface link, or the like. This is not limited herein.

Alternatively, when the terminal device is the RAN endogenous terminal device, the terminal device may perform air interface communication with the access network device through an uplink (uplink, UL). In an uplink (uplink, UL) direction, the terminal sends data to the access network device. The access network device forwards the received data to a core network element. The core network element processes the data, and sends the processed data to an application server through an N6 interface. In a downlink (downlink, DL) direction, the application server sends downlink data to the core network element. The core network element processes the data, and sends the processed data to the access network device through an N3 interface. After the access network device processes the data, the data is sent to the terminal through the air interface.

Alternatively, when the terminal device is the RAN endogenous terminal device, the terminal device may communicate with the core network element through a specific interface. For example, the terminal device may communicate with the first network function entity through an Nx interface, or communicate with a mobility management network element in the core network element through an N1 interface.

Optionally, the terminal device in this application may include user equipment (user equipment, UE) in a 5G network or a future evolved public land mobile network (public land mobile network, PLMN), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, or another processing device connected to a wireless modem, an in-vehicle device or a wearable device, a virtual reality (virtual reality, VR) terminal device, an augmented reality (augmented reality, AR) terminal device, a terminal in industrial control, a terminal in vehicle to everything (vehicle to everything, V2X), a terminal in remote medical, a terminal in smart grid (smart grid), a terminal in transportation safety (transportation safety), a terminal in smart city (smart city), a terminal in smart home (smart home), a terminal in machine type communication (machine type communication, MTC), and the like.

The access network device in this application is a device that provides a wireless communication function for a terminal device, and is mainly configured to implement functions such as a wireless physical control function, resource scheduling, radio resource management, and radio access control.

Optionally, the access network device includes but is not limited to a next-generation base station (gNodeB, gNB) in 5G, a transmission and reception point (transmitting and receiving point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting point, TP), a mobile switching center, and the like. Optionally, the base station in embodiments of this application may include base stations in various forms, for example, a macro base station, a micro base station (which is also referred to as a small cell), and an access point. This is not specifically limited in embodiments of this application.

Optionally, the access network device in this application may be formed by a central unit (central unit, CU) and a distributed unit (distributed unit, DU). The CU and the DU may be physically separated, or may be deployed together. This is not specifically limited in embodiments of this application. The CU and the DU may be connected through an interface, for example, an F1 interface. The CU and the DU may be divided based on a protocol layer of a wireless network. For example, functions of an RRC protocol layer and a PDCP protocol layer are set in the CU, and functions of an RLC protocol layer, a media access control (media access control, MAC) protocol layer, and a physical (physical, PHY) protocol layer are set in the DU. It may be understood that such protocol layer division of processing functions of the CU and the DU is merely an example, and division may alternatively be performed in another manner. This is not specifically limited in embodiments of this application.

The first network function entity in this application is configured to implement one or more functions:
(1) Validity verification of a task: verifies whether a task is a reasonable task requested by a valid terminal device.

Optionally, the task in this application may be a perception task or a computing task. The perception task may be understood as a task executed based on a perception resource, and the perception resource may be various sensors, for example, a pressure sensor, a gyro sensor, an air pressure sensor, a magnetic sensor, an acceleration sensor, a distance sensor, an optical proximity sensor, a temperature sensor, an ambient light sensor, a fingerprint sensor, a touch sensor, and a bone conduction sensor. The computing task may be understood as a task executed based on a computing resource. The computing resource may be various central processing units (central processing units, CPUs), general processing units (general processing units, GPUs), and the like.

(2) Task decomposition: determines whether a task is decomposed into a plurality of subtasks. When a task is decomposed into a plurality of subtasks, a node for executing each subtask is determined.

For example, a task 1 is decomposed into a subtask 1, a subtask 2, and a subtask 3, and it is determined that a node 1 executes the subtask 1. a node 2 executes the subtask 2, and a node 3 executes the subtask 3.

Optionally, in this application, a task execution node may include a terminal device, an access network device, or an independently deployed execution unit.

(3) Configuration of execution resource type: is a configuration of a type of an execution resource used when a node executes a task. The execution resource may be a perception resource or a computing resource. When the execution resource is a perception resource, a type of the perception resource may be a sensor type. When the execution resource is a computing resource, the computing resource may be a type of a CPU or a GPU.

For example, when the task executed by the node is perceiving a temperature of an environment in which the node is located, a type of the execution resource may be a temperature sensor.

(4) Configuration of execution resource quantity: is a configuration of a quantity of execution resources used when a node executes a task.

For example, when the task executed by the node is perceiving the temperature of the environment in which the node is located, the quantity of execution resources may be a quantity of temperature sensors. In other words, a quantity of temperature sensors used when the node executes the task is configured by the first network function entity.

(5) Network requirement parsing: determines a corresponding quality of service (quality of service, QoS) level and/or bandwidth size when a task execution result is transmitted.

For example, when an execution result of the perception task executed by the node is a result obtained through semantic extraction, or when an execution result of the computing task executed by the node is a model obtained through data modeling, bandwidth that needs to be occupied is small, and the first network function entity may configure a small bandwidth for transmitting the execution result. Alternatively, when the execution result of the perception task executed by the node is original data, or when the execution result of the computing task executed by the node is data, the bandwidth that needs to be occupied is large, and the first network function entity may configure a large bandwidth for transmitting the execution result.

For example, when the task executed by the node is a real-time task, and transmission delay and reliability requirements are high, the first network function entity may configure a high QoS level for transmitting the execution result, for example, configure a QoS level with a highest priority. Alternatively, when the task executed by the node is a non-real-time task, and the transmission delay and reliability requirements are low, the first network function entity may configure a low QoS level.

(6) Data service: is an interactive service for providing a task execution result.

For example, when the terminal device is a third-party terminal device, the first network function entity provides the task execution result for the third-party terminal device.

It should be noted that, this application does not limit the first network function entity to implement all the functions described above, and does not limit that the first network function entity cannot implement functions other than the functions described above.

Optionally, the first network function entity may include a control unit and a data unit. The control unit is configured to implement a control function of the first network function entity, for example, the foregoing task validity verification function, the task decomposition function, the execution resource type configuration function, the execution resource quantity configuration function, and the network requirement parsing function. The data unit is configured to implement a data plane function of the first network function entity, for example, the foregoing data service function.

In the communication system provided in this application, the Nx interface is a reference point between the terminal device and the first network function entity, and is used by the terminal device and the first network function entity to exchange task-oriented control plane information, for example, task request information, task acknowledgment information, or terminal capability information. It may be understood that, when the terminal device is a third-party terminal device, the Nx interface may be understood as an external interface. In addition, the Nx interface may also function as an external interface to exchange control information with a server in the DN.

The Ny interface is a reference point between the access network device and the first network function entity, and is used by the access network device and the first network function entity to exchange task-oriented control information (for example, task configuration information) and/or task-oriented data information (for example, a task execution result). Further, the Ny interface may include a control plane Ny interface (denoted as an Ny 1 interface) and a data plane Ny interface (denoted as an Ny 2 interface), which are respectively used by the access network device and the first network function entity to exchange task-oriented control information and task-oriented data information.

The Nz interface is another external interface, and is for data exchange between the first network function entity and a third-party device, for example, used by the first network function entity to exchange data information with the server in the DN, or used by the first network function entity to exchange task-oriented data information with the terminal device 2.

It should be noted that, each of the terminal device, the access network device, and the first network function entity in this application may be one or more chips, or may be a system on chip (system on chip, SOC), or the like. FIG. 4 is merely an exemplary drawing, in which a quantity of devices included is not limited. In addition, in addition to the devices shown in FIG. 4, the communication system may further include another device. Names of each device, each link, and each interface in FIG. 4 are not limited. In addition to the names shown in FIG. 4, each device, each link, and each interface may be named with other names. In addition to the network element shown in FIG. 4, the system shown in FIG. 4 may further include a network slice selection network element, a network repository network element, an authentication service network element, a network storage network element, a network data analysis network element, a network exposure network element, and the like. This is not limited.

Optionally, a communication system 40 shown in FIG. 4 may be applied to an existing 5G network and another future network, for example, a 6G network. This is not specifically limited in embodiments of this application.

That the communication system 40 shown in FIG. 4 is applied to an existing 5G network or a 6G network is used as an example. As shown in FIG. 5a, the first network function entity may be a perception management function (perception management function, PMF) network element. The communication system may further include an AMF network element, a UPF network element, and a DN.

It may be understood that, FIG. 5a is merely an example of network elements included in the communication system. In actual application, the communication system may further include other network elements, such as an SMF network element, a UDM network element, a network exposure function (network exposure function, NEF) network element, an authentication server function (authentication server function, AUSF) network element, a network slice selection function (network slice selection function, NSSF) network element, a network function repository function (network exposure function Repository Function, NRF) network element, a policy control function (policy control function, PCF) network element, a unified data repository (unified data repository, UDR) network element, and an unstructured data storage function (unstructured data storage function, UDSF). This is not specifically limited in this application.

A control plane of the communication system shown in FIG. 5a includes two parts: the AMF network element and the PMF network element. The AMF network element is oriented to conventional access and mobility management, in other words, oriented to connection management, and the PMF network element is oriented to task management.

For functions of each interface, refer to the related description in FIG. 1 or FIG. 4. Details are not described herein again.

Optionally, the PMF network element may include a PMF control plane network element (denoted as a PMF-C) and a PMF data plane network element (denoted as a PMF-U). The PMF control plane network element is configured to implement a control function of the PMF network element, for example, the foregoing task validity verification function, the task decomposition function, the execution resource type configuration function, the execution resource quantity configuration function, and the network requirement parsing function. The PMF data plane network element is configured to implement a data plane function of the PMF network element, for example, the foregoing data service function. In this case, the communication system in this application may be shown in FIG. 5b.

It should be noted that the name of the interface between the network elements in FIG. 4, FIG. 5a, or FIG. 5b is merely an example. In a specific implementation, the interface name may be another name. This is not specifically limited in embodiments of this application.

It should be noted that, the access network device, the AMF network element, the PMF network element, and the like in FIG. 5a or FIG. 5b are only names, and the names constitute no limitation on the devices. In the 5G network and another future network, network elements or entities corresponding to the access network device, the AMF network element, and the PMF network element may alternatively have other names. This is not specifically limited in embodiments of this application.

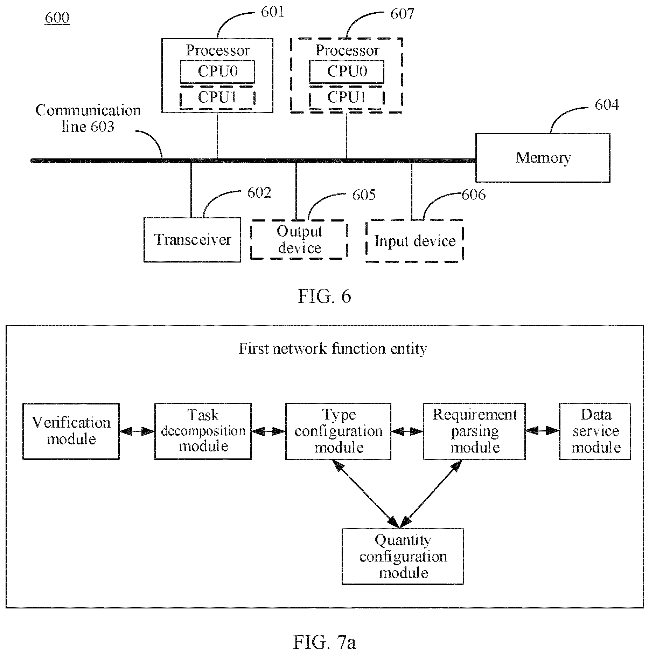

During specific implementation, each terminal device, the access network device, or the first network function entity shown in FIG. 4 may use a composition structure shown in FIG. 6, or include components shown in FIG. 6. FIG. 6 is a schematic composition diagram of a communication apparatus 600 according to an embodiment of this application. The communication apparatus 600 may be a terminal device, or a chip or a system on chip in a terminal device; or may be an access network device, or a chip or a system on chip in an access network device; or may be a first network function entity, or a chip or a system on chip in a first network function entity.

As shown in FIG. 6, the communication apparatus 600 includes a processor 601, a transceiver 602, and a communication line 603. Further, the communication apparatus 600 may further include a memory 604. The processor 601, the memory 604, and the transceiver 602 may be connected through the communication line 603.

The processor 601 is a central processing unit (central processing unit, CPU), a general purpose processor, a network processor (network processor, NP), a digital signal processor (digital signal processor, DSP), a microprocessor, a microcontroller, a programmable logic device (programmable logic device, PLD), or any combination thereof. The processor 601 may alternatively be another apparatus having a processing function, for example, a circuit, a component, or a software module. This is not limited.

The transceiver 602 is configured to communicate with another device or another communication network. The another communication network may be an Ethernet, a radio access network (radio access network, RAN), a wireless local area network (wireless local area networks, WLAN), or the like. The transceiver 602 may be a module, a circuit, a transceiver, or any apparatus that can implement communication.

The communication line 603 is configured to transmit information between components included in the communication apparatus 600.

The memory 604 is configured to store instructions and/or data. The instructions may be a computer program.

The memory 604 may be a read-only memory (read-only memory, ROM) or another type of static storage device that can store static information and/or instructions, or may be a random access memory (random access memory). RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disk storage (including a compact disc, a laser disc, an optical disc, a digital versatile disc, a Bluray disc, and the like), a disk storage medium or another magnetic storage device, or the like. This is not limited.

It should be noted that, the memory 604 may exist independently of the processor 601, or may be integrated with the processor 601. The memory 604 may be configured to store instructions, program code, some data, or the like. The memory 604 may be located in the communication apparatus 600, or may be located outside the communication apparatus 600. This is not limited. The processor 601 is configured to execute the instructions stored in the memory 604, to implement a communication method provided in the following embodiments of this application.

In an example, the processor 601 may include one or more CPUs, for example, a CPU 0 and a CPU 1 in FIG. 6.

In an optional implementation, the communication apparatus 600 includes a plurality of processors. For example, in addition to the processor 601 in FIG. 6, the communication apparatus 600 may further include a processor 607.

In an optional implementation, the communication apparatus 600 further includes an output device 605 and an input device 606. For example, the input device 606 is a device such as a keyboard, a mouse, a microphone, or a joystick, and the output device 605 is a device such as a display screen or a speaker (speaker).

It should be noted that, the communication apparatus 600 may be a desktop computer, a portable computer, a network server, a mobile phone, a tablet computer, a wireless terminal, an embedded device, a chip system, or a device having a similar structure in FIG. 6. In addition, the composition structure shown in FIG. 6 does not constitute a limitation on the communication apparatus. In addition to the components shown in FIG. 6, the communication apparatus may include more or fewer components than those shown in the figure, or combine some components, or have different component arrangements.

FIG. 6 may be understood as a structural description of the terminal device, the access network device, or the first network function entity from a hardware perspective. In this application, the first network function entity is further divided into modules from a perspective of logical function division. FIG. 7a shows logical module division of the first network function entity according to this application.

As shown in FIG. 7a, the first network function entity includes one or more of the following modules: a verification module, a task decomposition module, a type configuration module, a quantity configuration module, a requirement parsing module, and a data service module. The modules respectively provide the foregoing task validity verification function, the task decomposition function, the execution resource type configuration function, the execution resource quantity configuration function, the network requirement parsing function, and the data service function

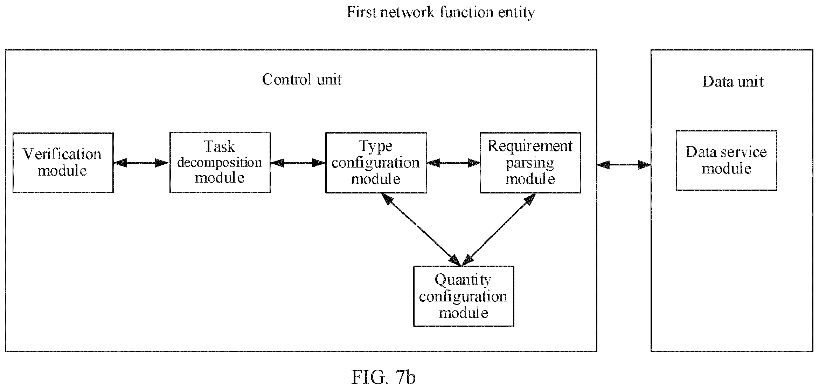

Optionally, when the first network function entity includes a control unit and a data unit, as shown in FIG. 7b, the control unit may include the verification module, the task decomposition module, the type configuration module, the quantity configuration module, and the requirement parsing module, and the data unit may include the data service module.

It should be noted that, the module names in FIG. 7a or FIG. 7b are merely examples, and in a specific implementation, the module names may be other names. The connection relationship between the modules in FIG. 7a or FIG. 7b is merely an example. There may be another connection relationship in a specific implementation. This is not specifically limited in embodiments of this application.

The following describes a protocol stack of an access network device in this application.

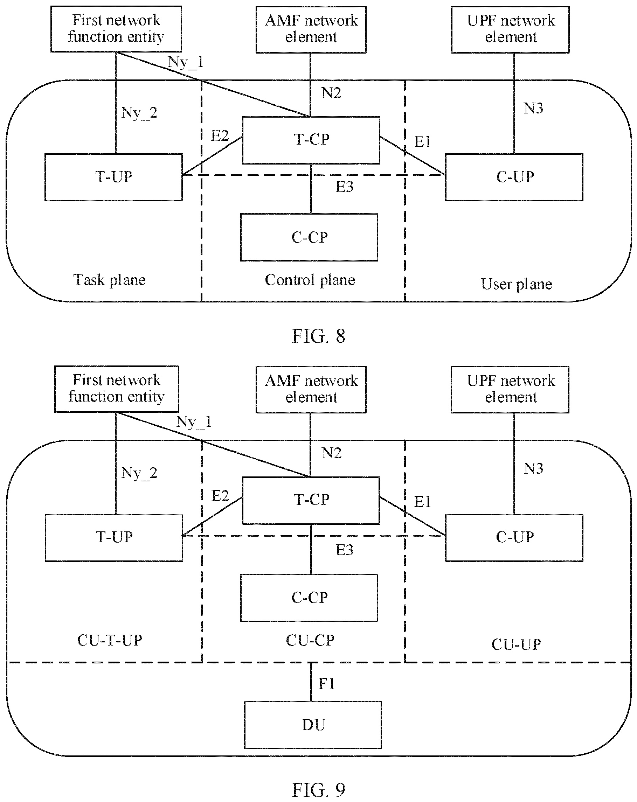

As shown in FIG. 8, the access network device in this application includes a control plane, a user plane, and a task plane (or referred to as a computing plane). The control plane may include a task-control plane (task-control plane, T-CP) entity for task-oriented control. A reference point between the T-CP and the first network function entity is an Ny interface, and may be specifically an Ny_1 interface. A reference point between the T-CP and an AMF network element is an N2 interface. The control plane may further include a connection-control plane (C-CP) entity for connection-oriented control. The user plane may include a connection-user plane (connection-user plane, C-UP) entity for connection-oriented data transmission, and a reference point between the connection-user plane entity and a UPF network element is an N3 interface. The task plane may include a task-user plane (task-user plane, T-UP) entity for task-oriented data transmission, and a reference point between the task plane and the first network function entity is an Ny interface, and may be specifically an Ny_2 interface.

The entities in FIG. 8 may communicate with each other through an interface. For example, the T-UP entity and the T-CP entity may communicate with each other through an E2 interface, and the T-CP entity and the CUP entity may communicate with each other through an E1 interface. Optionally, the T-UP entity and the C-UP entity may communicate with each other through an E3 interface.

Optionally, when the access network device is formed by a CU and a DU, refer to FIG. 9, the CU may include a CU-CP, a CU-UP, and a CU-T-UP. The CU-CP is configured to implement a function of the foregoing control plane, the CU-UP is configured to implement a function of the foregoing user plane, and the CU-T-UP is configured to implement a function of the foregoing task plane.

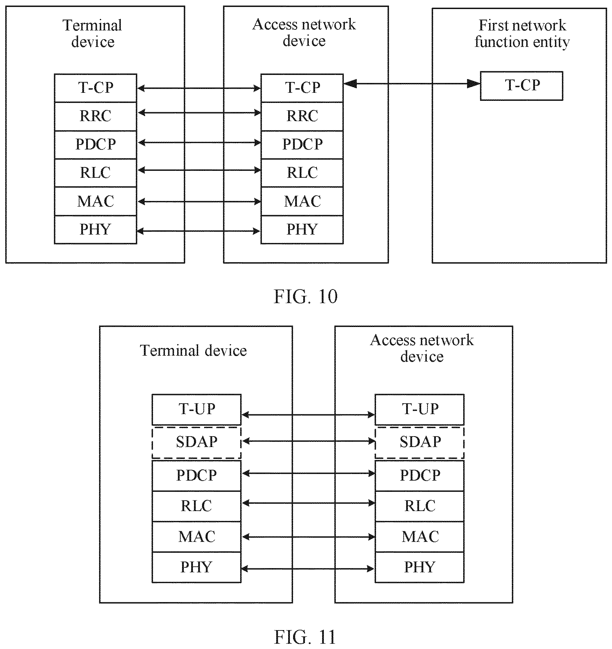

Optionally, on the control plane, this application further provides a T-CP protocol located above an RRC protocol layer and used for task-related control, for example, task requesting, task disassembling, execution resource configuration, and transmission of task-related control information. Based on this, a control plane protocol stack architecture between the terminal device, the access network device, and the first network function entity may be shown in FIG. 10.

The task-related control information refers to information other than a task execution result in a task-oriented scenario, for example, task request information, task configuration information, and task acknowledgment information.

Optionally, the task-related control information may be transmitted between the terminal device and the access network device through one or more of the following: a task-type RRC container (for example, a T-CP-Container), task-type NAS signaling (for example, NAS-T-CP), or a task-type SRB (for example, a SRB3). In other words, this application provides a task-type RRC container, task-type NAS signaling, or a task-type SRB to transmit the task-related control information.

Optionally, that the task-related control information is transmitted through the task-type RRC container may be understood as that the task-related control information is encapsulated in the RRC container. Similarly, that the task-related control information is transmitted through the task-type NAS signaling may be understood as that the task-related control information is encapsulated in the NAS signaling. That the task-related control information is transmitted through the task-type SRB may be understood as that the task-type related control information is mapped to the task-type SRB for transmission.

Optionally, when the task-related control information is transmitted through the task-type RRC container, after receiving the task-type RRC container, the access network device forwards the task-related control information included in the task-type RRC container to the first network function entity; or the access network device encapsulates the task-related control information from the first network function entity into the task-type RRC container and then forwards the task-related control information to the terminal device. When the task-related control information is transmitted through the task-type NAS signaling, after receiving the task-type NAS signaling, the access network device forwards the task-type NAS signaling to the AMF network element, and then the AMF network element forwards the task-type NAS signaling to the first network function entity; or the first network function entity sends the task-related control information to the access network device through forwarding by the AMF network element, and the access network device encapsulates the task-related control information into the task-type NAS signaling and forwards the task-type NAS signaling to the terminal device.

It may be understood that, the task-type RRC container represents only a type of RRC container newly provided in this application. A name of the RRC container is not specifically limited in this application, and the RRC container may have another name in actual application. Similarly, the task-type NAS signaling also represents only a new type of NAS signaling, and the task-type SRB represents only a new type of SRB. Names thereof are not specifically limited in this application.

Based on this solution, this application provides the task-type RRC container, the task-type NAS signaling, or the task-type SRB for transmitting task-related control information, so that after receiving the task-related control information transmitted through the task-type RRC container, the task-type NAS signaling, or the task-type SRB, the access network device can determine a receiver of the task-related control information, for example, the first network function entity. Therefore, the task-related control information is forwarded to the receiver to ensure a correct transmission direction of the task-related control information, to improve a task success rate.

On the task plane, this application further provides a T-UP protocol located above a PDCP layer or an SDAP layer and used for transmitting a task execution result. Based on this, a task plane protocol stack architecture between a terminal device and an access network device may be shown in FIG. 11. The SDAP layer indicates through a dotted box that the task plane protocol stack may include the SDAP layer. In this case, the T-UP protocol layer is located above the SDAP protocol layer. Alternatively, the task plane protocol stack may not include the SDAP protocol layer. In this case, the T-UP protocol layer is located above the PDCP protocol layer.

Optionally, when the task execution result is transmitted between the terminal device and the access network device, there may be the following four mapping manners:
Manner 1: Mapping to a task-type data protocol data unit (protocol data unit, PDU) of the PDCP, namely, a task-type PDCP data PDU.

In other words, in this application, the task execution result is distinguished at the PDCP layer, and mapped to the task-type PDCP data PDU. In this case, there are three types of PDCP data PDUs at the PDCP layer: a PDCP data PDU corresponding to an SRB, a PDCP data PDU corresponding to a DRB, and a task-type PDCP data PDU.

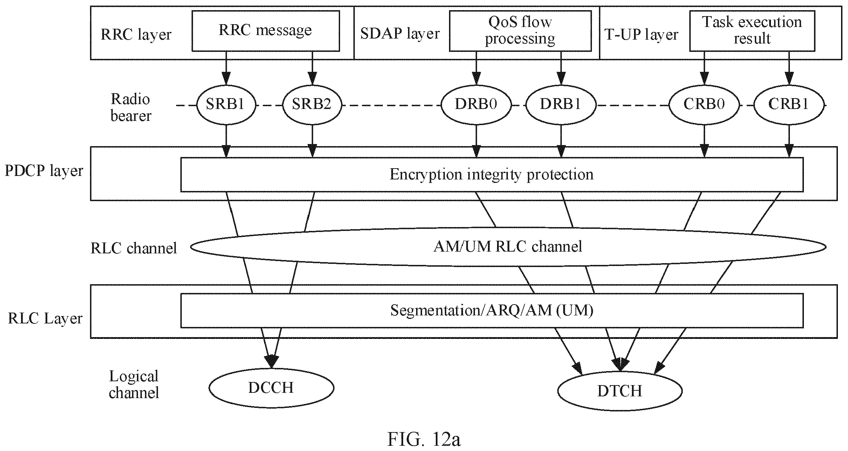

Optionally, similar to the SRB and the DRB, in Manner 1, this application provides a calculating radio bearer (calculating radio bearer, CRB) for transmitting the task execution result. In this case, for example, as shown in FIG. 12a, the task execution result on the task plane is first mapped to the CRB, then mapped to the task-type PDCP data PDU at the PDCP layer, and finally transmitted through a DTCH.

Manner 2: Mapping to a task-type SDAP data protocol data unit, namely, a task-type SDAP data PDU.

In other words, in this application, the task execution result is distinguished from conventional connection-oriented service data at the SDAP layer, the task execution result is mapped to the task-type SDAP data PDU, and connection-oriented service data is mapped to a conventional-type SDPA data PDU. In other words, there are two types of SDAP data PDUs at the SDAP layer.

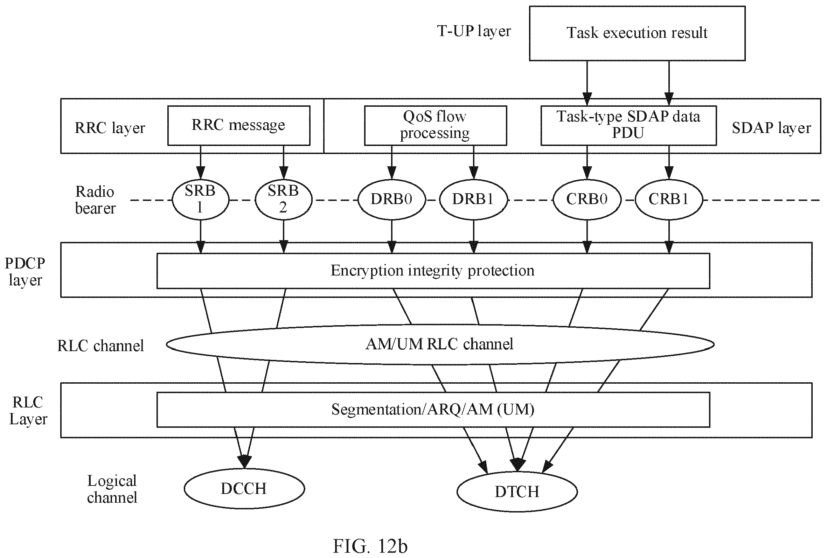

Optionally, when Manner 2 is used, this application also provides the CRB for the task execution result. In this case, for example, as shown in FIG. 12b, the task execution result of the task plane is first mapped to the task-type SDAP data PDU, then mapped to the CRB, and transmitted through the DTCH after encryption integrity protection is performed at the PDCP layer.

Manner 3: Mapping to a task-type QoS flow.

In other words, in this application, the task execution result and the conventional connection-oriented service data are distinguished through a QoS flow. Specifically, the task execution result and the conventional connection-oriented service data may be distinguished through a QoS flow identifier (QoS flow identifier, QFI). After receiving the task-type QoS flow, the access network device and the terminal device may determine the task execution result transmitted through the QoS flow.

Manner 4: Mapping to a task-type DRB.

In other words, in this application, the task execution result is distinguished from the conventional connection-oriented service data through the DRB, the task execution result is mapped to the task-type DRB, and the connection-oriented service data is mapped to a conventional-type DRB.

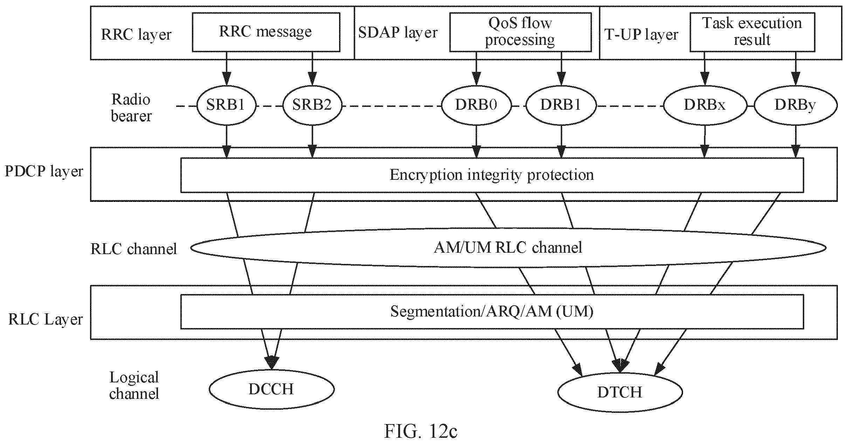

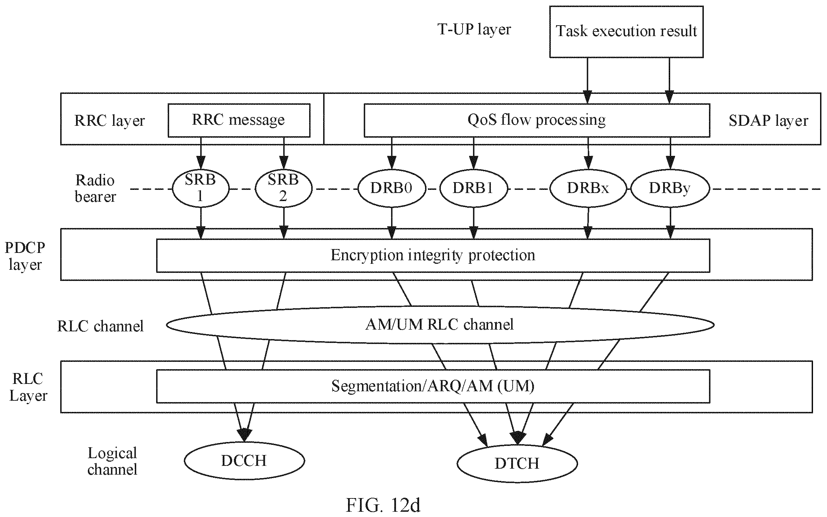

For example, when the task plane protocol stack does not include the SDAP layer, as shown in FIG. 12c, the task execution result of the task plane is first mapped to the task-type DRB (denoted as DRBx and DRBy in the figure), then processed by the PDCP layer and the RLC layer, and finally transmitted by the DTCH. Alternatively, when the task plane protocol stack includes the SDAP layer, as shown in FIG. 12d, the task execution result of the task plane is first mapped to the QoS flow, and mapping from the QoS flow to the DRB is performed at the SDAP layer. In this scenario, the SDAP layer may distinguish data in the QoS flow, map the task execution result to the task-type DRB, and map the conventional connection-oriented service data to the conventional DRB.

Optionally, a DRB for transmitting connection-oriented service data and a task-type DRB may be uniformly numbered. For example, the terminal device supports 32 DRBs, in other words, the terminal device supports DRB0 to DRB32. In this case, the DRB0 to the DRB20 may be DRBs for transmitting connection-oriented service data, and the DRB21 to the DRB31 may be task-type DRBs. In this case, The DRBx and the DRBy in FIG. 12c and FIG. 12d may be two DRBs in the DRB 21 to the DRB 31. Certainly, there may also be another DRB numbering manner and another task-type DRB distinguishing manner. This is not specifically limited in this application.

It should be noted that, FIG. 12c and FIG. 12d are merely examples of two task-type DRBs, and a quantity of task-type DRBs is not limited in this application. Optionally, the foregoing Manner 1 may be used when the task plane protocol stack does not include the SDAP layer, or the foregoing Manner 2 may be used when the task plane protocol stack includes the SDAP layer, or the foregoing Manner 3 or Manner 4 may be used when the task plane protocol stack includes the SDAP layer. This is not specifically limited in this application.

Optionally, Manner 3 and Manner 4 may alternatively be combined for use. For example, the task execution result and the transmitted connection-oriented service data are distinguished through QoS. When the QoS flow is mapped to the DRB, the SDPA maps the task-type QoS flow to the task-type DRB, and maps the conventional connection-oriented QoS flow to the conventional DRB.

It may be understood that, the task-type PDCP data PDU represents only a type of PDCP data PDU newly provided in this application. A name of the PDCP data PDU is not specifically limited in this application, and the PDCP data PDU may have another name in actual application. Similarly, the task-type SDAP data PDU also represents only a new type of SDAP data PDU, the task-type QoS flow represents only a new type of QoS flow, and the task-type DRB represents only a new type of DRB. Names thereof are not specifically limited in this application.

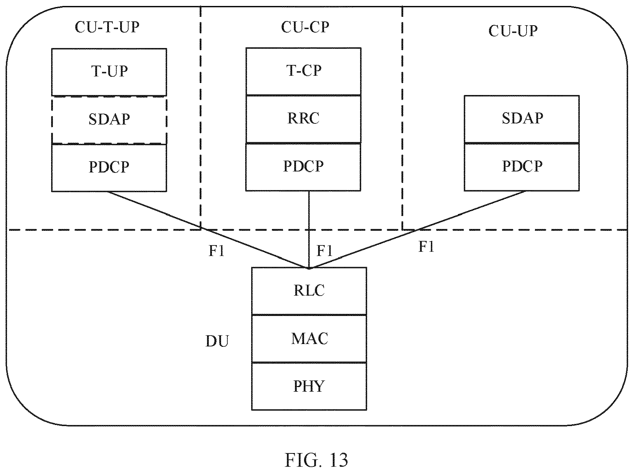

Optionally, when a structure of the access network device is shown in FIG. 9, as shown in FIG. 13, functions of the RRC protocol layer, the PDCP protocol layer corresponding to the SRB, and the T-CP protocol layer may be set in the CU-CP. Functions of the PDCP protocol layer and the SDAP protocol layer corresponding to the DRB may be set in the CU-UP. Functions of the T-UP protocol layer and the PDCP protocol layer corresponding to the task may be set in the CU-T-CP. Optionally, a function of the SDAP protocol layer corresponding to the task may also be set in the CU-T-CP.

Based on this solution, this application provides the task-type SDAP data PDU, the task-type PDCP data PDU, the task-type DRB, or the task-type QoS to transmit the task execution result. In this way, the access network device can identify the task execution result and directly send the task execution result to a task requester. Compared with a solution in which an execution result of a node is sent back to a task requester through a DN connected to a core network when a perception task or a computing task is implemented at an application layer, a transmission delay of the task execution result can be reduced, and task service efficiency can be improved.

The following describes in detail a communication method provided in embodiments of this application with reference to the communication system shown in FIG. 4. A relationship between devices in the following embodiments is first described.

A first terminal device may be any terminal device in the communication system. When the first terminal device is an endogenous terminal device of a RAN, a first access network device is a serving access network device of the first terminal device, or in other words, the first terminal device is a terminal device served by the first access network device.

A second terminal device may be a same terminal device as the first terminal device, or may be a terminal device other than the first terminal device in the communication system. A second access network device is a serving access network device of the second terminal device, or in other words, the second terminal device is a terminal device served by the second access network device.

Optionally, the second access network device and the first access network device may be a same access network device. In this case, the first terminal device and the second terminal device have a same serving access network device, and are located in coverage of a same access network device. Alternatively, the second access network device and the first access network device may be different access network devices. In this case, the first terminal device and the second terminal device have different serving access network devices, and are located in coverage of different access network devices.

A first node is a node that executes a task, and a type of the first node may be a terminal device, an access network device, or an independently deployed execution unit. It may be understood that, when the first node is a terminal device or an access network device, it indicates that the terminal device or the access network device has a task execution capability, in other words, has a perception capability or a computing capability, for example, has a sensor. The independently deployed execution unit may be understood as a device that has a task execution capability and is not integrated into a terminal device or an access network device. Task configuration information or a task execution result corresponding to the independently deployed execution unit is transmitted through a terminal device or an access network device that has a communication capability to which the independently deployed execution unit is mounted.

It may be understood that, the second terminal device represents a type of terminal device, and a quantity of second terminal devices is not specifically limited in this application. Similarly, the second access network device represents a type of access network devices, and a quantity of second access network devices is not specifically limited in this application.

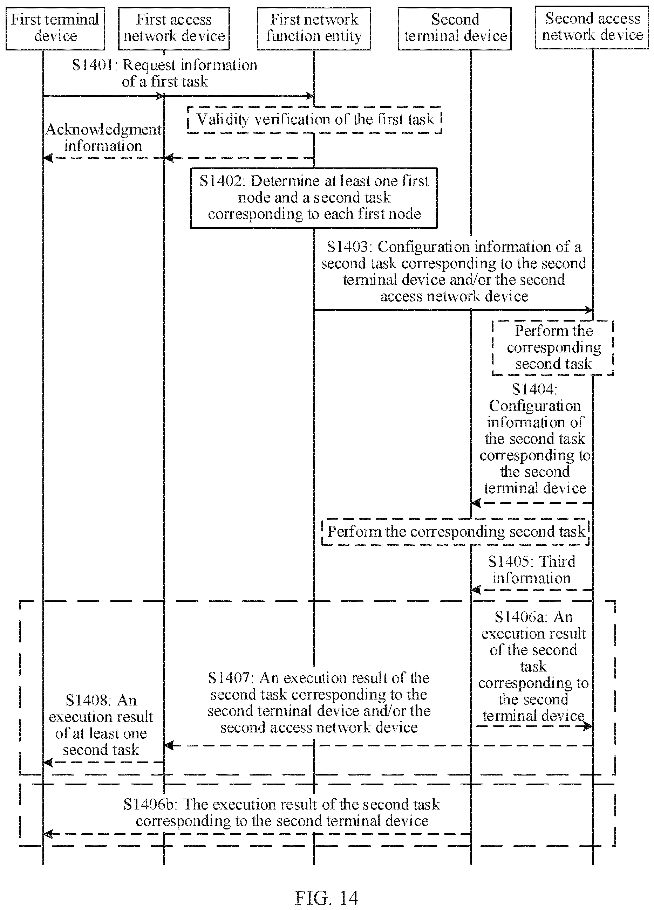

The following describes a communication method provided in this application in a scenario in which the first terminal device is the endogenous terminal device of the RAN, and the first node does not include the independently deployed execution unit. As shown in FIG. 14, the method includes the following steps:
S1401: The first terminal device sends first information to a first network function entity through the first access network device. Correspondingly, the first network function entity receives the first information from the first terminal device through the first access network device.

The first information includes request information of a first task. Optionally, the request information of the first task may include target type information of the first task and area information corresponding to the first task. For example, the first task is perceiving weather in a target area. A target type of the first task may be "weather". The area information corresponding to the first task is information about the target area. Alternatively, the first task is perceiving a traffic congestion situation of the target area, the target type of the first task is a "traffic congestion situation", and the area information corresponding to the first task is the information about the target area.

Optionally, when the first terminal device sends the first information to the first access network device, the first information may be transmitted through one or more of a task-type RRC container, task-type NAS signaling, or a task-type SRB, in other words, the first information may be encapsulated in the RRC container or the NAS signaling, and may be further mapped to the task-type SRB for transmission. For details, refer to the foregoing related description. Details are not described herein again.

Optionally, after receiving the request information of the first task, the first network function entity may further perform validity verification on the first task, for example, verify whether the requester (namely, the first terminal device) of the first task is valid, and/or verify whether the first task is valid. When it is verified that the first task is valid, the following step S 1402 is performed.

Optionally, after receiving the request information of the first task, the first network function entity may further send task acknowledgment information to the first terminal device through the first access network device, to notify the first terminal device that the first network function entity receives the request information of the first task. Correspondingly, the first terminal device may receive the task acknowledgment information from the first network function entity through the first access network device. When the first network function entity further performs validity verification on the task, the task acknowledgment information may be sent after it is verified that the first task is valid.

It should be noted that, a sequence in which the first network function entity performs step S1402 and sends the task acknowledgment information is not specifically limited in this application.

S1402: The first network function entity determines at least one first node and a second task corresponding to each first node in the at least one first node.

The second task is a subtask of the first task. In other words, after receiving the request information of the first task, the first network function entity may determine whether the first task is executed by a plurality of first nodes; and if yes, determine the plurality of first nodes and a second task corresponding to each first node, or otherwise, determine one first node. The first node executes the first task.

It may be understood that, the second task corresponding to the first node is a second task to be executed by the first node. If the first task is completed by one first node, and the second task is the same as the first task, the second task may still be referred to as a subtask of the first task, but in this case, the subtask of the first task is the first task. This embodiment is described through an example in which the first task includes a plurality of first nodes.

Optionally, second tasks corresponding to different first nodes may be the same or different. This is not specifically limited in this application.

Optionally, the first network function entity may determine the at least one first node and the second task corresponding to each first node in the at least one first node based on node capability information of a first node in a service range of the first network function entity. The node capability information indicates a task execution capability of the first node. For example, the node capability information may include a type, a quantity, and the like of sensors of the first node.

Optionally, the node capability information of the first node within the service range of the first network function entity may be obtained by the first network function entity before step S 1402. For example, the first network function entity may send request information to a first node in the service range of the first network function entity, to request the first node to report the node capability information, or the first node may actively report the node capability information to the first network function entity. This is not specifically limited in this application.

Based on this solution, the first network function entity can obtain the task execution capability of the first node, which is reference for decomposing the task and determining the first node for executing the task by the first network function entity, to improve task management efficiency and reasonableness of the first network function entity, and reduce a task execution delay.

Specifically, in this embodiment, an example in which the first node executing the second task includes the second terminal device and/or the second access network device is used for description. Certainly, a quantity of second terminal devices or a quantity of second access network devices is not specifically limited in this application.

It should be noted that the second terminal device that executes the second task may be the same as the first terminal device, in other words, the method for requesting the first task may be used for executing a subtask of the first task. In this case, interaction between the second terminal device and the first terminal device in the following embodiment may not be performed. In the following embodiment of this application, an example in which the second terminal device that executes the second task is different from the first terminal device is used for description.

Optionally, the second access network device and the first access network device may be the same or may be different. In FIG. 14, an example in which the second access network device and the first access network device are different is used for description. It may be understood that, when the second access network device is the same as the first access network device, the following actions implemented by the second access network device are implemented by the first access network device.

For example, the first task is perceiving weather in the target area. The first network function entity determines at least one terminal device and/or at least one access network device that executes the first task based on distribution of terminal devices in the target area, node capability information of the terminal devices, distribution of access network devices, and node capability information of the access network devices. For example, the first network function entity may determine that a second terminal device in the target area perceives a temperature of the target area, and a second access network device in the target area perceives ambient light intensity of the target area.

Alternatively, for example, the first task is perceiving the traffic congestion situation in the target area. The first network function entity determines, based on distribution of terminal devices in the target area and node capability information of the terminal devices, that a plurality of second terminal devices in the target area perceive respective corresponding information such as acceleration, a speed, and a distance.

S1403: The first network function entity sends configuration information of at least one second task. Correspondingly, the second access network device receives the second information from the first network function entity.

The configuration information of the second task is for configuring an execution resource corresponding to the second task. Specifically, the configuration information of the second task may be used to configure a resource type of the execution resource corresponding to the second task, and may further be used to configure a quantity of execution resources.

For example, the second task corresponding to the second terminal device is perceiving the temperature of the target area. The execution resource corresponding to the second task corresponding to the second terminal device may be a temperature sensor. In other words, the first network function entity may configure, for the second terminal device, that the type of the execution resource is the temperature sensor, and may further configure a quantity of temperature sensors. Similarly, for example, the second task corresponding to the second access network device is perceiving the ambient light intensity of the target area. The execution resource corresponding to the second task corresponding to the second access network device may be an ambient light sensor. In other words, the first network function entity may configure, for the second terminal device, that the type of the execution resource is the ambient light sensor, and may further configure a quantity of ambient light sensors.

Alternatively, for example, the first task is perceiving the traffic congestion situation in the target area, a second task corresponding to a second terminal device 1 is perceiving acceleration, and a second task corresponding to a second terminal device 2 is perceiving an instantaneous speed. An execution resource corresponding to the second task corresponding to the second terminal device 1 may be an acceleration sensor. In other words, the first network function entity may configure, for the second terminal device 1, that a type of the execution resource is the acceleration sensor, and may further configure a quantity of acceleration sensors. An execution resource corresponding to the second task corresponding to the second terminal device 2 may be a speed sensor. In other words, the first network function entity may configure, for the second terminal device 2, that a type of the execution resource is the speed sensor, and may further configure a quantity of speed sensors.

The first network function entity sends the configuration information of all the second tasks determined in step S 1402. If the first node corresponding to the second task is a terminal device, the first network function entity sends configuration information of a second task corresponding to the terminal device to a serving access network device of the terminal device, and the serving access network device of the terminal device sends the configuration information of the second task corresponding to the terminal device to the terminal device. If the first node corresponding to the second task is an access network device, the first network function entity sends configuration information of a second task corresponding to the access network device to the access network device.

Based on this, that the first network function entity sends configuration information of at least one second task may include: sending the configuration information of the second task corresponding to the at least one first node to the second access network device, where the at least one first node includes the second access network device and/or the second terminal device. Correspondingly, when the first node includes the second terminal device, the second information received by the second access network device includes the configuration information of the second task corresponding to the second terminal device. When the first node includes the second access network device, the second information includes the configuration information of the second task corresponding to the second access network device.

Optionally, when the second information includes the configuration information of the second task corresponding to the second access network device, the second access network device executes the second task corresponding to the second access network device. When the second information includes the configuration information of the second task corresponding to the second terminal device, the second access network device performs the following steps S1404 and S1405.

S1404: The second access network device sends the configuration information of the second task corresponding to the second terminal device to the second terminal device. Correspondingly, the second terminal device receives the configuration information of the second task corresponding to the second terminal device from the second access network device.

Optionally, the configuration information of the second task corresponding to the second terminal device is transmitted through one or more of a task-type RRC container, task-type NAS signaling, or a task-type SRB. In other words, the configuration information of the second task corresponding to the second terminal device may be encapsulated in the RRC container or the NAS signaling, and may be further mapped to the task-type SRB for transmission. For details, refer to the foregoing related description. Details are not described herein again.

After receiving the configuration information of the second task corresponding to the second terminal device, the second terminal device may execute the corresponding second task based on the configuration information.

S1405: The second access network device sends third information to the second terminal device. Correspondingly, the second terminal device receives the third information from the second access network device.

The third information is for determining a transmission link for an execution result of the second task corresponding to the second terminal device. The transmission link may be a sidelink between the second terminal device and the first terminal device, or may be an air interface link between the second terminal device and the second access network device.

Optionally, the third information may have different manners:
In a possible implementation, the third information may include configuration information of a sidelink resource. In this case, the transmission link is a sidelink between the second terminal device and the first terminal device. Alternatively, the third information may include configuration information of an air interface resource. In this case, the transmission link is an air interface link between the second terminal device and the second access network device.

In another possible implementation, the third information includes 1-bit indication information. When a value of the bit is " 1", it indicates that the transmission link is a sidelink between the second terminal device and the first terminal device. When the value of the bit is "0", it indicates that the transmission link is an air interface link between the second terminal device and the second access network device. Alternatively, when the value of the bit is "0", it indicates that the transmission link is a sidelink between the second terminal device and the first terminal device, and when the value of the bit is "1", it indicates that the transmission link is an air interface link between the second terminal device and the second access network device.

It may be understood that, in a second implementation, the second access network device further configures a corresponding link resource for the second terminal device.

Optionally, the second access network device may send the configuration information of the second task corresponding to the second terminal device and the third information in one message, or in two messages respectively. This is not specifically limited in this application.

Optionally, there is no strict sequence between step S 1404 and step S 1405. Step S 1404 may be performed first, and then step S1405 is performed. Alternatively, step S1405 may be performed first, and then step S1404 is performed. Alternatively, step S 1404 and step S 1405 may be performed simultaneously.

After receiving the third information, the second terminal device may determine a transmission link for the execution result of the second task corresponding to the second terminal device based on the third information. If it is determined based on the third information that the transmission link is an air interface link, the following steps S 1406a to S1408 are performed. Alternatively, if it is determined based on the third information that the transmission link is a sidelink, the following step S 1406b is performed.

S1406a: The second terminal device sends the execution result of the second task corresponding to the second terminal device to the second access network device. Correspondingly, the second access network device receives the execution result of the second task corresponding to the second terminal device from the second terminal device.

Optionally, the execution result of the second task corresponding to the second terminal device may be mapped to one of a task-type PDCP data PDU, a task-type SDAP data PDU, a task-type DRB, or a task-type QoS flow for transmission.

Optionally, when the execution result of the second task corresponding to the second terminal device is mapped to the QoS flow for transmission, a QoS level of the QoS flow may be configured by the first network function entity. Alternatively, when the execution result of the second task corresponding to the second terminal device is mapped to the task-type PDCP data PDU, the task-type SDAP data PDU, the task-type QoS flow, or the task-type DRB, a size of the transmission bandwidth may be configured by the first network function entity.

Optionally, when the second access network device is different from the first access network device, the second access network device further performs the following step S1407.

S1407: The second access network device sends the execution result of the second task corresponding to the second terminal device to the first access network device. Correspondingly, the first access network device receives the execution result of the second task corresponding to the second terminal device from the second access network device.

Optionally, if the first node that executes the second task includes the second access network device, in step S1407, the second access network device sends the execution result of the second task corresponding to the second access network device to the first access network device.

It may be understood that, when the second access network device and the first access network device are a same access network device, step S 1407 is not performed.

S1408: The first access network device sends the execution result of the at least one second task to the first terminal device. Correspondingly, the first terminal device receives the execution result of the at least one second task from the first access network device.

The execution result of the at least one second task includes the execution result of the second task corresponding to the second terminal device, and/or the execution result of the second task corresponding to the second access network device.

Optionally, the execution result of the at least one second task may be mapped to one of a task-type PDCP data PDU, a task-type SDAP data PDU, a task-type DRB, or a task-type QoS flow for transmission.

S1406b: The second terminal device sends the execution result of the second task corresponding to the second terminal device to the first terminal device. Correspondingly, the first terminal device receives the execution result of the second task corresponding to the second terminal device from the second terminal device.

Optionally, in this case, the execution result of the second task corresponding to the second terminal device may also be mapped to one of a task-type PDCP data PDU, a task-type SDAP data PDU, a task-type DRB, or a task-type QoS flow for transmission.

In this way, the first terminal device may obtain the execution result of the at least one second task, and may subsequently perform processing based on the execution result. This is not specifically limited in this application.

Based on the method shown in FIG. 14, the first terminal device sends the request information of the first task to the first network function entity. After receiving the request information of the task, the first network function entity may manage the first task, to be specific, allocate at least one first node for executing a subtask of the first task. Finally, the first node executes the subtask of the first task, and cooperatively completes the first task, to implement the task-centric communication mode. In addition, when a plurality of first nodes execute subtasks of the first task, task execution efficiency can be improved, and a delay can be reduced, thereby improving task service efficiency of the network.

It should be noted that, if the second task corresponding to the second terminal device is not successfully executed, the foregoing steps S1406a to S1408 and step S1406b are not performed. In this case, optionally, the second terminal device may send error information to the second access network device, to notify that the second task corresponding to the second terminal device is not successfully executed. The second access network device may feed back the error information to the first network function entity, and the first network function entity performs processing, for example, records the error information, and does not allocate tasks to the second terminal device in a subsequent task management process. This is not limited.

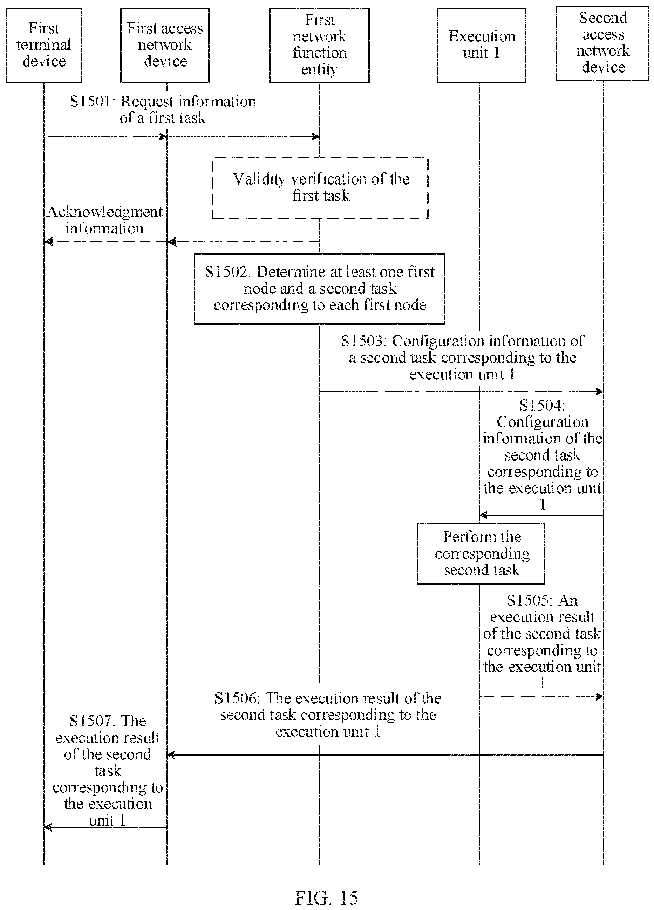

The following describes a communication method provided in this application in a scenario in which the first terminal device is the endogenous terminal device of the RAN, and the first node includes the independently deployed execution unit. As shown in FIG. 15, the method includes the following steps:
S1501 and S1502 are similar to steps S1401 and S1402 shown in FIG. 14, and a difference lies in that in step S1502, the first node that is determined by the first network function entity to execute the second task includes an independently deployed execution unit, which is denoted as an execution unit 1 in FIG. 15. In addition, the execution unit 1 is mounted to the second access network device.

S1503 is similar to step S1403 shown in FIG. 14, and a difference lies in that the second information received by the second access network device includes configuration information of a second task corresponding to the execution unit 1.

S1504: The second access network device sends the configuration information of the second task corresponding to the execution unit 1 to the execution unit 1. Correspondingly, the execution unit 1 receives the configuration information of the second task corresponding to the execution unit 1 from the second access network device.

Optionally, after receiving the configuration information of the second task corresponding to the execution unit 1, the execution unit 1 may execute the second task based on the configuration information, and perform the following step S1505.

S1505: The execution unit 1 sends an execution result of the second task corresponding to the execution unit 1 to the second access network device. Correspondingly, the second access network device receives the execution result of the second task corresponding to the execution unit 1 from the execution unit 1.

S1506: The second access network device sends the execution result of the second task corresponding to the execution unit 1 to the first access network device. Correspondingly, the first access network device receives the execution result of the second task corresponding to the execution unit 1 from the second access network device.

S1507: The first access network device sends the execution result of the second task corresponding to the execution unit 1 to the first terminal device. Correspondingly, the first terminal device receives the execution result of the second task corresponding to the execution unit 1 from the first access network device.

Optionally, the execution result of the second task corresponding to the execution unit 1 may be transmitted through one or more of a task-type RRC container, task-type NAS signaling, or a task-type SRB.

It should be noted that, in step S1502 in this embodiment, the first node that is determined by the first network function entity to execute the second task may further include the second terminal device and/or the second access network device. In this case, the communication method shown in FIG. 15 further includes a process related to the second terminal device and the second access network device. For a specific process, refer to the related description in FIG. 14. Details are not described herein again.

Based on the method shown in FIG. 15, the first terminal device sends the request information of the first task to the first network function entity. After receiving the request information of the task, the first network function entity may manage the first task, to be specific, allocate at least one first node for executing a subtask of the first task. Finally, the first node executes the subtask of the first task, and cooperatively completes the first task, to implement the task-centric communication mode. In addition, when a plurality of first nodes execute subtasks of the first task, task execution efficiency can be improved, and a delay can be reduced, thereby improving task service efficiency of the network.

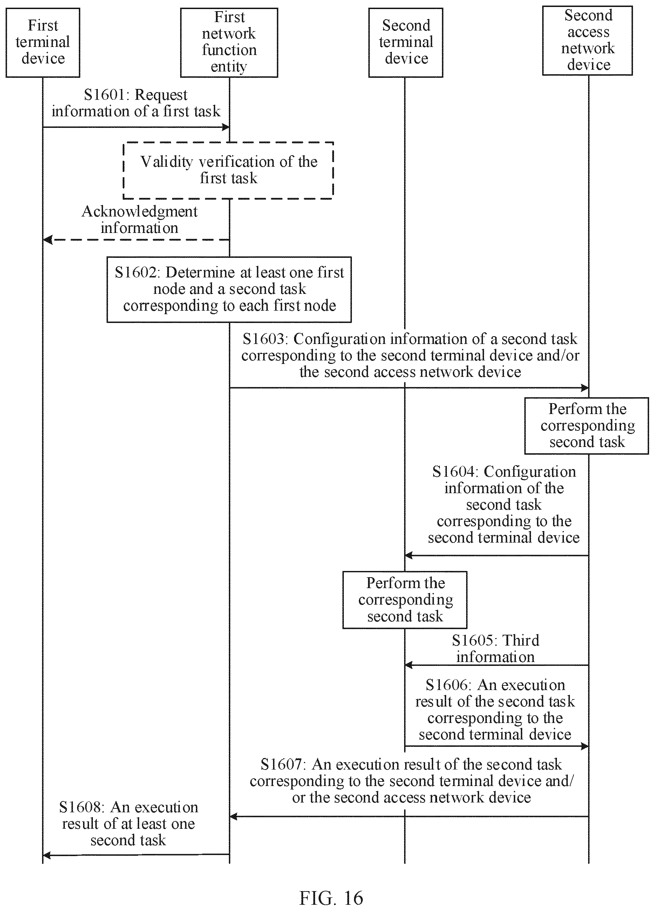

The following describes a communication method provided in this application in a scenario in which the first terminal device is the third-party device, and the first node does not include the independently deployed execution unit. As shown in FIG. 16, the method includes the following steps:
S1601: The first terminal device sends first information to the first network function entity. Correspondingly, the first network function entity receives the first information from the first terminal device.

For the first information, refer to the related description in step S1401. Details are not described herein again.

Optionally, in step S1601, the first terminal device may send the first information to the first network function entity through an N3IWF entity. Correspondingly, the first network function entity receives the first information from the first terminal device through the N3IWF entity.

Optionally, after receiving the request information of the first task, the first network function entity may further perform validity verification on the first task, or may further send acknowledgment information to the first terminal device. For details, refer to the related description in the embodiment shown in FIG. 14. Details are not described herein again.

S1602 to S1604 are the same as step S 1402 to step S 1404 in the embodiment shown in FIG. 14. For details, refer to the related description of step S 1402 to step S1404. Details are not described herein again.

A difference between S1605 and step S1405 in the embodiment shown in FIG. 14 lies in that the third information indicates that the transmission link of the second task corresponding to the second terminal device is an air interface link between the second terminal device and the second access network device.

S1606 is the same as step S1406a in the embodiment shown in FIG. 14. For details, refer to the related description of step S 1406. Details are not described herein again.

S1607: The second access network device sends an execution result of at least one second task to the first network function entity. Correspondingly, the first network function entity receives the execution result of the at least one second task from the second access network device.

When the first node that executes the second task includes the second terminal device, step S1607 includes the execution result of the second task corresponding to the second terminal device. When the first node that executes the second task includes the second access network device, step S1607 includes the execution result of the second task corresponding to the second access network device.

S1608: The first network function entity sends the execution result of the at least one second task to the first terminal device. Correspondingly, the first terminal device receives the execution result of the at least one second task from the first network function entity.

Optionally, the first network function entity may send the execution result of the at least one second task to the first terminal device through the N3IWF entity. Correspondingly, the first terminal device may receive the execution result of the at least one second task from the first network function entity through the N3IWF entity.

Based on the method shown in FIG. 16, the first terminal device sends the request information of the first task to the first network function entity. After receiving the request information of the task, the first network function entity may manage the first task, to be specific, allocate at least one first node for executing a subtask of the first task. Finally, the first node executes the subtask of the first task, and cooperatively completes the first task, to implement the task-centric communication mode. In addition, when a plurality of first nodes execute subtasks of the first task, task execution efficiency can be improved, and a delay can be reduced, thereby improving task service efficiency of the network.

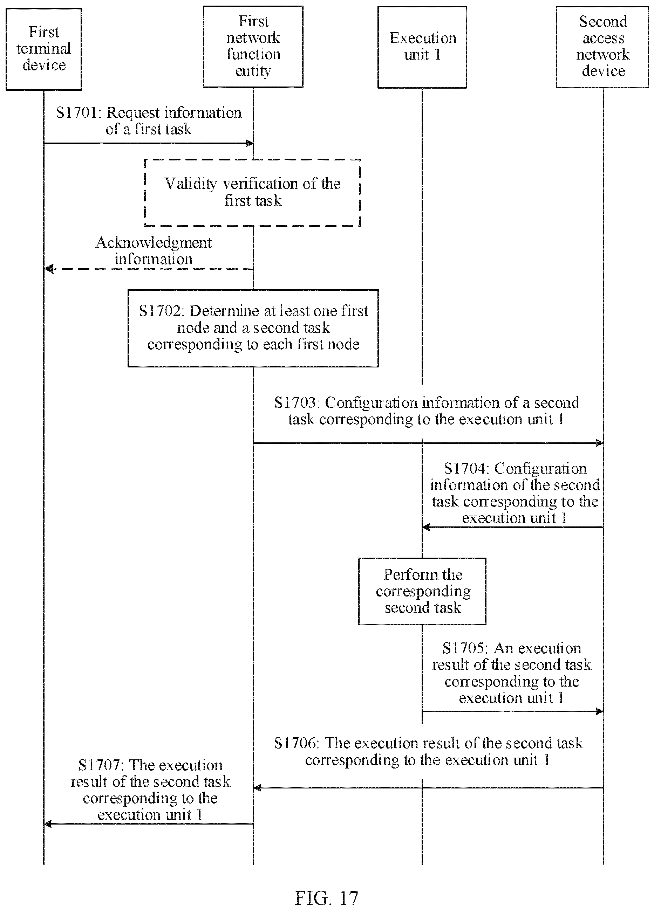

The following describes a communication method provided in this application in a scenario in which the first terminal device is the third-party device, and the first node includes the independently deployed execution unit. As shown in FIG. 17, the method includes the following steps:
S1701 is the same as step S1601 in the embodiment shown in FIG. 16. For details, refer to the related description of step S1601. Details are not described herein again.

S1702 to S1705 are similar to step S1502 to step S 1505 in the embodiment shown in FIG. 15. For details, refer to the related description of step S1502 to step S1505, and details are not described herein again.

S1706: The second access network device sends the execution result of the second task corresponding to the execution unit 1 to the first network function entity. Correspondingly, the first network function entity receives the execution result of the second task corresponding to the execution unit 1 from the second access network device.

S1707: The first network function entity sends the execution result of the second task corresponding to the execution unit 1 to the first terminal device. Correspondingly, the first terminal device receives the execution result of the second task corresponding to the execution unit 1 from the first network function entity.

It should be noted that, in step S1702 in this embodiment, the first node that is determined by the first network function entity to execute the second task may further include the second terminal device and/or the second access network device. In this case, a process related to the second terminal device and the second access network device is further performed in this embodiment. For a specific process, refer to the related description in FIG. 14. Details are not described herein again.

Based on the method shown in FIG. 17, the first terminal device sends the request information of the first task to the first network function entity. After receiving the request information of the task, the first network function entity may manage the first task, to be specific, allocate at least one first node for executing a subtask of the first task. Finally, the first node executes the subtask of the first task, and cooperatively completes the first task, to implement the task-centric communication mode. In addition, when a plurality of first nodes execute subtasks of the first task, task execution efficiency can be improved, and a delay can be reduced, thereby improving task service efficiency of the network.

The foregoing describes the task management performed by the first network function entity in various scenarios provided in this application, to implement the task-centric communication method.

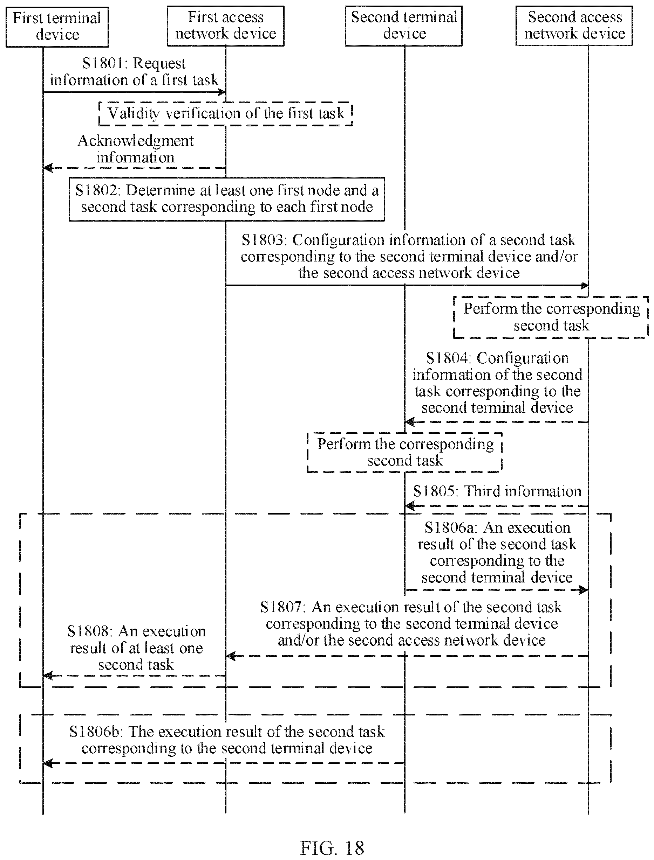

In addition, in an implementation scenario of this application, the foregoing first network function entity may be integrated into the access network device, or in other words, the access network device can implement functions implemented by the first network function entity. In this case, the communication system provided in this application includes at least one terminal device and at least one access network device, and the terminal device is the endogenous terminal device of the RAN. In this scenario, a communication method provided in this application is shown in FIG. 18. The method includes the following steps:
S1801: A first terminal device sends first information to a first access network device. Correspondingly, the first access network device receives the first information from the first terminal device.

The first information includes request information of a first task. The first information may be transmitted through one or more of a task-type RRC container, task-type NAS signaling, or a task-type SRB.

S1802: The first access network device determines at least one first node and a second task corresponding to each first node in the at least one first node.

The first access network device can implement all functions implemented by the first network function entity in step S1402. For details, refer to the related description in step S1402. Details are not described herein again.

S1803: The first access network device sends configuration information of at least one second task. Correspondingly, a second access network device receives second information from the first access network device.

The first access network device can implement all functions implemented by the first network function entity in step S1403. For details, refer to the related description in step S1403. Details are not described herein again.

The second information includes configuration information of a second task corresponding to the second access network device, and/or configuration information of a second task corresponding to the second terminal device.

S1804 and S1805 are the same as step S1404 and step S1405 in the embodiment shown in FIG. 14. For details, refer to the related description of step S1404 and step S1405. Details are not described herein again.

After the second terminal device receives third information, if it is determined based on the third information that a transmission link is an air interface link, the following steps S1806a to S1808 are performed. Alternatively, if it is determined based on the third information that the transmission link is a side link, the following step S1806b is performed.

S1806a to S1808 are the same as step S1406a to step S1408 in the embodiment shown in FIG. 14. For details, refer to the related description of step S 1806a to step S1808. Details are not described herein again.

S1806b is the same as step S 1406b in the embodiment shown in FIG. 14. For details, refer to the related description of step S 1406b. Details are not described herein again.

In this way, the first terminal device may obtain the execution result of the at least one second task, and may subsequently perform processing based on the execution result. This is not specifically limited in this application.

Based on the method shown in FIG. 18, the first terminal device sends the request information of the first task to the first access network device. After receiving the request information of the task, the first access network device may manage the first task, to be specific, allocate at least one first node for executing a subtask of the first task. Finally, the first node executes the subtask of the first task, and cooperatively completes the first task, to implement the task-centric communication mode. In addition, when a plurality of first nodes execute subtasks of the first task, task execution efficiency can be improved, and a delay can be reduced, thereby improving task service efficiency of the network. In addition, in the method shown in FIG. 18, an existing network architecture does not need to be modified, and it is easy to implement.

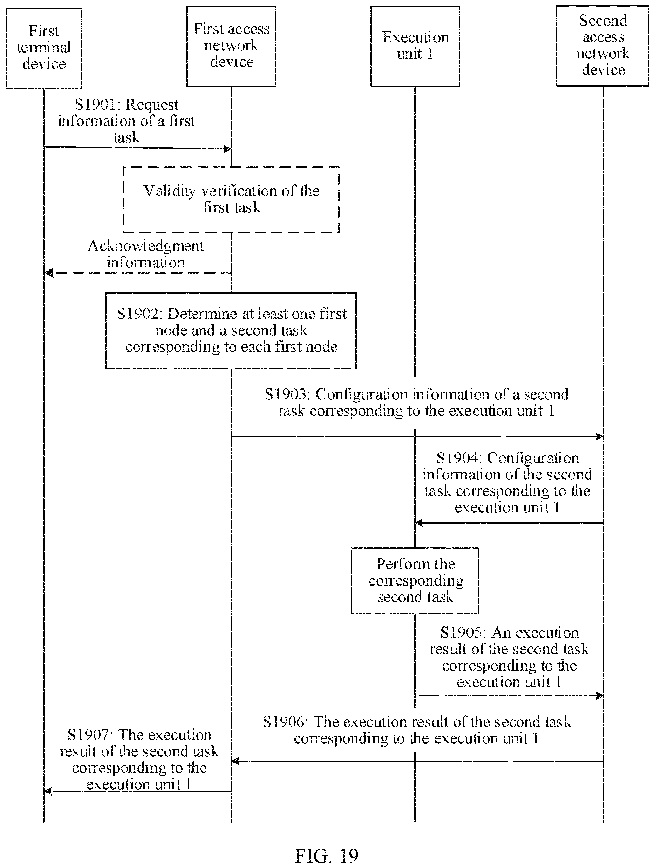

In the method shown in FIG. 18, the first node that executes the second task does not include an independently deployed execution unit. The following describes a communication method in which the first node that executes the second task includes an independently deployed execution unit. As shown in FIG. 19, the method includes the following steps:
A difference between S1901 and S 1902 and steps S1801 and S1802 in the embodiment shown in FIG. 18 lies in that in step S1902, the first access network device determines that the first node includes an independently deployed execution unit that is denoted as an execution unit 1 in FIG. 19. In addition, the execution unit 1 is mounted to the second access network device.

S1903 is similar to step S1803 shown in FIG. 18, and a difference lies in that the second information received by the second access network device includes configuration information of a second task corresponding to the execution unit 1.

S1904: The second access network device sends the configuration information of the second task corresponding to the execution unit 1 to the execution unit 1. Correspondingly, the execution unit 1 receives the configuration information of the second task corresponding to the execution unit 1 from the second access network device.

Optionally, after receiving the configuration information of the second task corresponding to the execution unit 1, the execution unit 1 may execute the second task based on the configuration information, and perform the following step S1905.

S1905: The execution unit 1 sends an execution result of the second task corresponding to the execution unit 1 to the second access network device. Correspondingly, the second access network device receives the execution result of the second task corresponding to the execution unit 1 from the execution unit 1.

S1906: The second access network device sends the execution result of the second task corresponding to the execution unit 1 to the first access network device. Correspondingly, the first access network device receives the execution result of the second task corresponding to the execution unit 1 from the second access network device.

S1907: The first access network device sends the execution result of the second task corresponding to the execution unit 1 to the first terminal device. Correspondingly, the first terminal device receives the execution result of the second task corresponding to the execution unit 1 from the first access network device.

Optionally, the execution result of the second task corresponding to the execution unit 1 may be transmitted through one or more of a task-type RRC container, task-type NAS signaling, or a task-type SRB.

It should be noted that, in step S 1902 in this embodiment, the first node that is determined by the first access network device to execute the second task may further include the second terminal device and/or the second access network device. In this case, the communication method shown in FIG. 19 further includes a process related to the second terminal device and the second access network device. For a specific process, refer to the related description in FIG. 18. Details are not described herein again.

Based on the method shown in FIG. 19, the first terminal device sends the request information of the first task to the first access network device. After receiving the request information of the task, the first access network device may manage the first task, to be specific, allocate at least one first node for executing a subtask of the first task. Finally, the first node executes the subtask of the first task, and cooperatively completes the first task, to implement the task-centric communication mode. In addition, when a plurality of first nodes execute subtasks of the first task, task execution efficiency can be improved, and a delay can be reduced, thereby improving task service efficiency of the network. In addition, in the method shown in FIG. 19, an existing network architecture does not need to be modified, and it is easy to implement.

In the embodiments shown in FIG. 14 to FIG. 19, an action of each device may be performed by the processor 601 in the communication apparatus 600 shown in FIG. 6 by invoking application program code stored in the memory 604, to instruct each device to perform the action.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that, in the foregoing embodiments, methods and/or steps implemented by each device may also be implemented by a component (for example, a chip or a circuit) that can be used in the device.

The foregoing mainly describes the solutions provided in this application from a perspective of interaction between devices. Correspondingly, this application further provides a communication apparatus. The communication apparatus is configured to implement the foregoing methods. The communication apparatus may be the terminal device in the foregoing method embodiments, an apparatus including the foregoing terminal device, or a component that can be used in the terminal device. Alternatively, the communication apparatus may be the network device in the foregoing method embodiments, an apparatus including the foregoing network device, or a component that can be used in the network device. It may be understood that, to implement the foregoing functions, the communication apparatus includes a corresponding hardware structure and/or software module for performing the functions. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

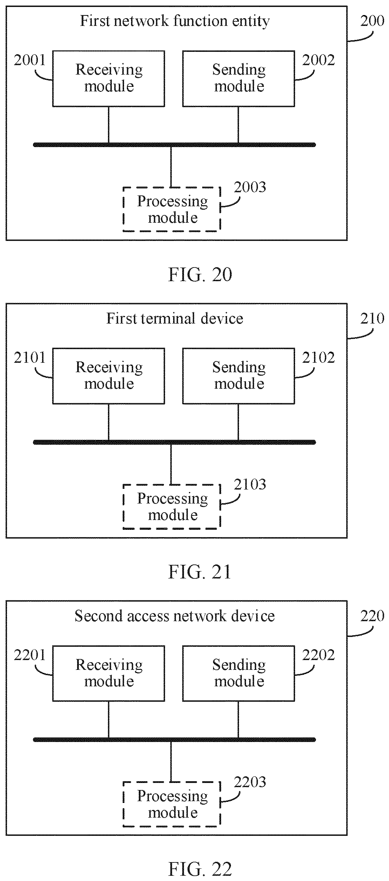

For example, the communication apparatus is the first network function entity in the foregoing method embodiments. FIG. 20 is a schematic diagram of a structure of a first network function entity 200. The first network function entity 200 includes a receiving module 2001 and a sending module 2002, and further includes a processing module 2003. The receiving module 2001 and the sending module 2002 may be collectively referred to as a transceiver module. The receiving module 2001 and the sending module 2002 may be separated, or may be integrated. This is not limited in embodiments of this application.

Optionally, the receiving module 2001 may be implemented by a receiving circuit, a receiver, a receiver device, or a communication interface. The sending module 2002 may be implemented by a sending circuit, a transmitter, a transmitter device, or a communication interface.

Optionally, the first network function entity may further include a storage module (not shown in FIG. 20), configured to store data and/or a computer program or instructions.

For example, the first network function entity 200 may be a first network function entity, or may be a chip applied to the first network function entity, or another combined component or component that has a function of the first network function entity. When the first network function entity 200 is the first network function entity, the receiving module 2001 and the sending module 2002 may be a transceiver, the transceiver may include an antenna, a radio frequency circuit, and the like, and the processing module 2003 may be a processor (or a processing circuit), for example, a baseband processor. The baseband processor may include one or more CPUs. When the first network function entity 200 is a component having a function of the first network function entity, the receiving module 2001 and the sending module 2002 may be a radio frequency unit, and the processing module 2003 may be a processor (or a processing circuit), for example, a baseband processor. When the first network function entity 200 is a chip system, the receiving module 2001 and the sending module 2002 may be input and output interfaces of a chip (for example, a baseband chip), and the processing module 2003 may be a processor (or a processing circuit) of the chip system, and may include one or more central processing units.

For example, the receiving module 2001 and the sending module 2002 may be respectively configured to perform receiving and sending operations performed by the first network function entity in the embodiments shown in FIG. 14 to FIG. 19, and/or other processes for supporting the technology described in this specification. The processing module 2003 may be configured to perform an operation performed by the first network function entity in the embodiments shown in FIG. 14 to FIG. 19 except a sending and receiving operation, and/or another process for supporting the technology described in this specification.

Specifically, the receiving module 2001 is configured to receive first information from a first terminal device, where the first information includes request information of a first task. The sending module 2002 is configured to send configuration information of at least one second task, where the second task is a subtask of the first task, the configuration information of the second task is for configuring an execution resource corresponding to the second task, and the second task corresponds to a first node.

Optionally, the first terminal device is a terminal device served by a first access network device. That the receiving module 2001 is configured to receive first information from a first terminal device includes: The receiving module 2001 is configured to receive the first information from the first terminal device through the first access network device.

Optionally, the receiving module 2001 is further configured to receive an execution result of a second task corresponding to at least one first node from a second access network device, where the at least one first node includes the second access network device and/or a second terminal device, and the second terminal device is a terminal device served by the second access network device; and the sending module 2002 is further configured to send the execution result of the second task corresponding to the at least one first node to the first terminal device.

Optionally, that the sending module 2002 is configured to send configuration information of at least one second task includes: The sending module 2002 is configured to send the configuration information of the second task corresponding to the at least one first node to the second access network device, where the at least one first node includes the second access network device and/or the second terminal device, and the second terminal device is a terminal device served by the second access network device.

Optionally, the processing module 2003 is configured to verify validity of the first task. That the sending module 2002 is configured to send configuration information of at least one second task includes: The sending module 2002 is configured to send the configuration information of the at least one second task when the first task is valid.

Optionally, the processing module 2003 is configured to obtain node capability information of at least one first node, where the node capability information indicates a task execution capability of the first node.

All related content of the steps in the method embodiments may be cited in function descriptions of corresponding functional modules. Details are not described herein again.

In this embodiment, the first network function entity 200 is presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the first network function entity 200 may be in a form of the communication apparatus 600 shown in FIG. 6.

For example, the processor 601 in the communication apparatus 600 shown in FIG. 6 may call the computer-executable instructions stored in the memory 604, so that the communication apparatus 600 performs the communication method in the foregoing method embodiments.

Specifically, a function/implementation process of the receiving module 2001, the sending module 2002, or the processing module 2003 in FIG. 20 may be implemented by the processor 601 in the communication apparatus 600 shown in FIG. 6 by calling the computer-executable instructions stored in the memory 604. Alternatively, a function/implementation process of the processing module 2003 in FIG. 20 may be implemented by the processor 601 in the communication apparatus 600 shown in FIG. 6 by calling the computer-executable instructions stored in the memory 604, and a function/implementation process of the receiving module 2001 and the sending module 2002 in FIG. 20 may be implemented by the transceiver 602 in the communication apparatus 600 shown in FIG. 6.

Because the first network function entity 200 provided in this embodiment can perform the foregoing communication method, for a technical effect that can be obtained by the first network function entity, refer to the foregoing method embodiments. Details are not described again herein.

For example, the communication apparatus is the first terminal device in the foregoing method embodiments. FIG. 21 is a schematic diagram of a structure of a first terminal device 210. The first terminal device 210 includes a receiving module 2101 and a sending module 2102, and further includes a processing module 2103. The receiving module 2101 and the sending module 2102 may be collectively referred to as a transceiver module. The receiving module 2101 and the sending module 2102 may be separated, or may be integrated. This is not limited herein.

Optionally, the receiving module 2101 may be implemented by a receiving circuit, a receiver, a receiver device, or a communication interface. The sending module 2102 may be implemented by a sending circuit, a transmitter, a transmitter device, or a communication interface.

Optionally, the first terminal device may further include a storage module (not shown in FIG. 21), configured to store data and/or a computer program or instructions.

For example, the first terminal device 210 may be a first terminal device, or may be a chip applied to the first terminal device, or another combined component or component that has a function of the first terminal device. When the first terminal device 210 is the first terminal device, the receiving module 2101 and the sending module 2102 may be a transceiver, the transceiver may include an antenna, a radio frequency circuit, and the like, and the processing module 2103 may be a processor (or a processing circuit), for example, a baseband processor. The baseband processor may include one or more CPUs. When the first terminal device 210 is a component having a function of the first terminal device, the receiving module 2101 and the sending module 2102 may be a radio frequency unit, and the processing module 2103 may be a processor (or a processing circuit), for example, a baseband processor. When the first terminal device 210 is a chip system, the receiving module 2101 and the sending module 2102 may be input and output interfaces of a chip (for example, a baseband chip), and the processing module 2103 may be a processor (or a processing circuit) of the chip system, and may include one or more central processing units.

For example, the receiving module 2101 and the sending module 2102 may be respectively configured to perform receiving and sending operations performed by the first terminal device in the embodiments shown in FIG. 14 to FIG. 19, and/or other processes for supporting the technology described in this specification. The processing module 2103 may be configured to perform an operation performed by the first terminal device in the embodiments shown in FIG. 14 to FIG. 19 except a sending and receiving operation, and/or another process for supporting the technology described in this specification.

Specifically, the sending module 2102 is configured to send first information to a first network function entity, where the first information includes request information of a first task. The receiving module 2101 is configured to receive an execution result of at least one second task, where the second task is a subtask of the first task, and the second task corresponds to a first node.

Optionally, the first terminal device is a terminal device served by a first access network device. That the sending module 2102 is configured to send first information to a first network function entity includes: The sending module 2102 is configured to send the first information to the first network function entity through the first access network device.

Optionally, that the receiving module 2101 is configured to receive an execution result of at least one second task includes: The receiving module 2101 is configured to receive the execution result of the second task corresponding to at least one first node from the first access network device, where the first node includes a second access network device and/or a second terminal device, and the second terminal device is a terminal device served by the second access network device.

Optionally, that the receiving module 2101 is configured to receive an execution result of at least one second task includes: The receiving module 2101 is configured to receive the execution result of the second task corresponding to the second terminal device from the second terminal device.

Optionally, that the receiving module 2101 is configured to receive an execution result of at least one second task includes: The receiving module 2101 is configured to receive the execution result of the at least one second task from the first network function entity.

All related content of the steps in the method embodiments may be cited in function descriptions of corresponding functional modules. Details are not described herein again.

In this embodiment, the first terminal device 210 is presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the first terminal device 210 may be in a form of the communication apparatus 600 shown in FIG. 6.

For example, the processor 601 in the communication apparatus 600 shown in FIG. 6 may call the computer-executable instructions stored in the memory 604, so that the communication apparatus 600 performs the communication method in the foregoing method embodiments.

Specifically, a function/implementation process of the receiving module 2101, the sending module 2102, or the processing module 2103 in FIG. 21 may be implemented by the processor 601 in the communication apparatus 600 shown in FIG. 6 by calling the computer-executable instructions stored in the memory 604. Alternatively, a function/implementation process of the processing module 2103 in FIG. 21 may be implemented by the processor 601 in the communication apparatus 600 shown in FIG. 6 by calling the computer-executable instructions stored in the memory 604, and a function/implementation process of the receiving module 2101 and the sending module 2102 in FIG. 21 may be implemented by the transceiver 602 in the communication apparatus 600 shown in FIG. 6.

Because the first terminal device 210 provided in this embodiment can perform the foregoing communication method, for a technical effect that can be obtained by the first terminal device, refer to the foregoing method embodiments. Details are not described again herein.

For example, the communication apparatus is the second access network device in the foregoing method embodiments. FIG. 22 is a schematic diagram of a structure of a second access network device 220. The second access network device 220 includes a receiving module 2201 and a sending module 2202, and further includes a processing module 2203. The receiving module 2201 and the sending module 2202 may be collectively referred to as a transceiver module. The receiving module 2201 and the sending module 2202 may be separated, or may be integrated. This is not limited herein.

Optionally, the receiving module 2201 may be implemented by a receiving circuit, a receiver, a receiver device, or a communication interface. The sending module 2202 may be implemented by a sending circuit, a transmitter, a transmitter device, or a communication interface.

Optionally, the second access network device may further include a storage module (not shown in FIG. 22), configured to store data and/or a computer program or instructions.

For example, the second access network device 220 may be a second access network device, or may be a chip applied to the second access network device, or another combined component or component that has a function of the second access network device. When the second access network device 220 is the second access network device, the receiving module 2201 and the sending module 2202 may be a transceiver, the transceiver may include an antenna, a radio frequency circuit, and the like, and the processing module 2203 may be a processor (or a processing circuit), for example, a baseband processor. The baseband processor may include one or more CPUs. When the second access network device 220 is a component having a function of the second access network device, the receiving module 2201 and the sending module 2202 may be a radio frequency unit, and the processing module 2203 may be a processor (or a processing circuit), for example, a baseband processor. When the second access network device 220 is a chip system, the receiving module 2201 and the sending module 2202 may be input and output interfaces of a chip (for example, a baseband chip), and the processing module 2203 may be a processor (or a processing circuit) of the chip system, and may include one or more central processing units.

For example, the receiving module 2201 and the sending module 2202 may be respectively configured to perform receiving and sending operations performed by the second access network device in the embodiments shown in FIG. 14 to FIG. 19, and/or other processes for supporting the technology described in this specification. The processing module 2203 may be configured to perform an operation performed by the second access network device in the embodiments shown in FIG. 14 to FIG. 19 except a sending and receiving operation, and/or another process for supporting the technology described in this specification.

Specifically, the receiving module 2201 is configured to receive second information from a first network function entity, where the second information includes configuration information of a second task corresponding to a second terminal device, and the configuration information of the second task is for configuring an execution resource corresponding to the second task; and the sending module 2202 is configured to send the configuration information of the second task corresponding to the second terminal device to the second terminal device.

Optionally, the sending module 2202 is further configured to send third information to the second terminal device, where the third information is for determining a transmission link for an execution result of the second task corresponding to the second terminal device.

Optionally, the receiving module 2201 is further configured to receive first information from the first terminal device, where the first information includes request information of a first task, and the second task is a subtask of the first task; and the sending module 2202 is configured to send the first information to the first network function entity.

All related content of the steps in the method embodiments may be cited in function descriptions of corresponding functional modules. Details are not described herein again.

In this embodiment, the second access network device 220 is presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the second access network device 220 may be in a form of the communication apparatus 600 shown in FIG. 6.

For example, the processor 601 in the communication apparatus 600 shown in FIG. 6 may call the computer-executable instructions stored in the memory 604, so that the communication apparatus 600 performs the communication method in the foregoing method embodiments.

Specifically, a function/implementation process of the receiving module 2201, the sending module 2202, or the processing module 2203 in FIG. 22 may be implemented by the processor 601 in the communication apparatus 600 shown in FIG. 6 by calling the computer-executable instructions stored in the memory 604. Alternatively, a function/implementation process of the processing module 2203 in FIG. 22 may be implemented by the processor 601 in the communication apparatus 600 shown in FIG. 6 by calling the computer-executable instructions stored in the memory 604, and a function/implementation process of the receiving module 2201 and the sending module 2202 in FIG. 22 may be implemented by the transceiver 602 in the communication apparatus 600 shown in FIG. 6.

Because the second access network device 220 provided in this embodiment can perform the foregoing communication method, for a technical effect that can be obtained by the second access network device, refer to the foregoing method embodiments. Details are not described again herein.

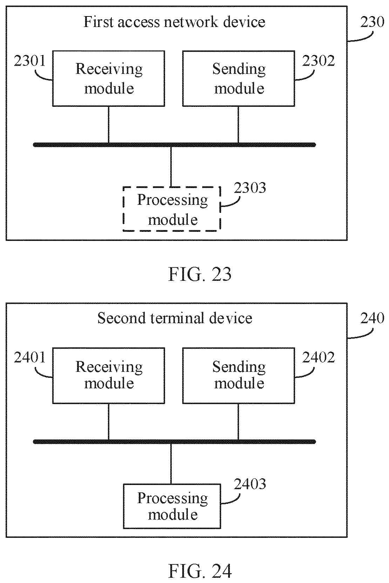

For example, the communication apparatus is the first access network device in the foregoing method embodiments. FIG. 23 is a schematic diagram of a structure of a first access network device 230. The first access network device 230 includes a receiving module 2301 and a sending module 2302, and further includes a processing module 2303. The receiving module 2301 and the sending module 2302 may be collectively referred to as a transceiver module. The receiving module 2301 and the sending module 2302 may be separated, or may be integrated. This is not limited herein.

Optionally, the receiving module 2301 may be implemented by a receiving circuit, a receiver, a receiver device, or a communication interface. The sending module 2302 may be implemented by a sending circuit, a transmitter, a transmitter device, or a communication interface.

Optionally, the first access network device may further include a storage module (not shown in FIG. 23), configured to store data and/or a computer program or instructions.

For example, the first access network device 230 may be a first access network device, or may be a chip applied to the first access network device, or another combined component or component that has a function of the first access network device. When the first access network device 230 is the first access network device, the receiving module 2301 and the sending module 2302 may be a transceiver, the transceiver may include an antenna, a radio frequency circuit, and the like, and the processing module 2303 may be a processor (or a processing circuit), for example, a baseband processor. The baseband processor may include one or more CPUs. When the first access network device 230 is a component having a function of the first access network device, the receiving module 2301 and the sending module 2302 may be a radio frequency unit, and the processing module 2303 may be a processor (or a processing circuit), for example, a baseband processor. When the first access network device 230 is a chip system, the receiving module 2301 and the sending module 2302 may be input and output interfaces of a chip (for example, a baseband chip), and the processing module 2303 may be a processor (or a processing circuit) of the chip system, and may include one or more central processing units.

For example, the receiving module 2301 and the sending module 2302 may be respectively configured to perform receiving and sending operations performed by the first access network device in the embodiments shown in FIG. 14 to FIG. 19, and/or other processes for supporting the technology described in this specification. The processing module 2303 may be configured to perform an operation performed by the first access network device in the embodiments shown in FIG. 14 to FIG. 19 except a sending and receiving operation, and/or another process for supporting the technology described in this specification.

Specifically, the receiving module 2301 is configured to receive, by the first access network device, first information from a first terminal device. The sending module 2302 is configured to send the first information to a first network function entity, where the first information includes request information of a first task.

Optionally, the receiving module 2301 is further configured to receive an execution result of a second task corresponding to at least one first node from a second access network device, where the second task is a subtask of the first task, the at least one first node includes the second access network device and/or a second terminal device, and the second terminal device is a terminal device served by the second access network device; and the sending module 2302 is further configured to send the execution result of the second task corresponding to the at least one first node to the first terminal device.

All related content of the steps in the method embodiments may be cited in function descriptions of corresponding functional modules. Details are not described herein again.

In this embodiment, the first access network device 230 is presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the first access network device 230 may be in a form of the communication apparatus 600 shown in FIG. 6.

For example, the processor 601 in the communication apparatus 600 shown in FIG. 6 may call the computer-executable instructions stored in the memory 604, so that the communication apparatus 600 performs the communication method in the foregoing method embodiments.

Specifically, a function/implementation process of the receiving module 2301, the sending module 2302, or the processing module 2303 in FIG. 23 may be implemented by the processor 601 in the communication apparatus 600 shown in FIG. 6 by calling the computer-executable instructions stored in the memory 604. Alternatively, a function/implementation process of the processing module 2303 in FIG. 23 may be implemented by the processor 601 in the communication apparatus 600 shown in FIG. 6 by calling the computer-executable instructions stored in the memory 604, and a function/implementation process of the receiving module 2301 and the sending module 2302 in FIG. 23 may be implemented by the transceiver 602 in the communication apparatus 600 shown in FIG. 6.

Because the first access network device 230 provided in this embodiment can perform the foregoing communication method, for a technical effect that can be obtained by the first access network device, refer to the foregoing method embodiments. Details are not described again herein.

For example, the communication apparatus is the second terminal device in the foregoing method embodiments. FIG. 24 is a schematic diagram of a structure of a second terminal device 240. The second terminal device 240 includes a receiving module 2401, a sending module 2402, and a processing module 2403. The receiving module 2401 and the sending module 2402 may be collectively referred to as a transceiver module. The receiving module 2401 and the sending module 2402 may be separated, or may be integrated. This is not limited herein.

Optionally, the receiving module 2401 may be implemented by a receiving circuit, a receiver, a receiver device, or a communication interface. The sending module 2402 may be implemented by a sending circuit, a transmitter, a transmitter device, or a communication interface.

Optionally, the second terminal device may further include a storage module (not shown in FIG. 24), configured to store data and/or a computer program or instructions.

For example, the second terminal device 240 may be a second terminal device, or may be a chip applied to the second terminal device, or another combined component or component that has a function of the second terminal device. When the second terminal device 240 is the second terminal device, the receiving module 2401 and the sending module 2402 may be a transceiver, the transceiver may include an antenna, a radio frequency circuit, and the like, and the processing module 2403 may be a processor (or a processing circuit), for example, a baseband processor. The baseband processor may include one or more CPUs. When the second terminal device 240 is a component having a function of the second terminal device, the receiving module 2401 and the sending module 2402 may be a radio frequency unit, and the processing module 2403 may be a processor (or a processing circuit), for example, a baseband processor. When the second terminal device 240 is a chip system, the receiving module 2401 and the sending module 2402 may be input and output interfaces of a chip (for example, a baseband chip), and the processing module 2403 may be a processor (or a processing circuit) of the chip system, and may include one or more central processing units.

For example, the receiving module 2401 and the sending module 2402 may be respectively configured to perform receiving and sending operations performed by the second terminal device in the embodiments shown in FIG. 14 to FIG. 19, and/or other processes for supporting the technology described in this specification. The processing module 2403 may be configured to perform an operation performed by the second terminal device in the embodiments shown in FIG. 14 to FIG. 19 except a sending and receiving operation, and/or another process for supporting the technology described in this specification.

Specifically, the receiving module 2401 is configured to receive configuration information of a second task corresponding to the second terminal device from a second access network device. The processing module 2403 is configured to execute the second task corresponding to the second terminal device. The sending module 2402 is configured to send an execution result of the second task corresponding to the second terminal device.

Optionally, the receiving module 2401 is further configured to receive third information from the second access network device. The processing module 2403 is further configured to determine a transmission link for the execution result of the second task corresponding to the second terminal device based on the third information.

Optionally, when the transmission link is a sidelink between the second terminal device and the first terminal device, that the sending module 2402 is configured to send an execution result of the second task corresponding to the second terminal device includes: The sending module 2402 is configured to send the execution result of the second task corresponding to the second terminal device to the first terminal device.

Optionally, when the transmission link is an air interface link between the second terminal device and the second access network device, that the sending module 2402 is configured to send an execution result of the second task corresponding to the second terminal device includes: The sending module 2402 is configured to send the execution result of the second task corresponding to the second terminal device to the second access network device.

All related content of the steps in the method embodiments may be cited in function descriptions of corresponding functional modules. Details are not described herein again.

In this embodiment, the second terminal device 240 is presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the second terminal device 240 may be in a form of the communication apparatus 600 shown in FIG. 6.

For example, the processor 601 in the communication apparatus 600 shown in FIG. 6 may call the computer-executable instructions stored in the memory 604, so that the communication apparatus 600 performs the communication method in the foregoing method embodiments.

Specifically, a function/implementation process of the receiving module 2401, the sending module 2402, or the processing module 2403 in FIG. 24 may be implemented by the processor 601 in the communication apparatus 600 shown in FIG. 6 by calling the computer-executable instructions stored in the memory 604. Alternatively, a function/implementation process of the processing module 2403 in FIG. 24 may be implemented by the processor 601 in the communication apparatus 600 shown in FIG. 6 by calling the computer-executable instructions stored in the memory 604, and a function/implementation process of the receiving module 2401 and the sending module 2402 in FIG. 24 may be implemented by the transceiver 602 in the communication apparatus 600 shown in FIG. 6.

Because the second terminal device 240 provided in this embodiment can perform the foregoing communication method, for a technical effect that can be obtained by the second terminal device, refer to the foregoing method embodiments. Details are not described again herein.

Optionally, an embodiment of this application further provides a communication apparatus. The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. In another possible design, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor. The communication apparatus may be a chip or a chip system. When the communication apparatus is a chip system, the communication device may include a chip, or may include a chip and another discrete component. This is not specifically limited in embodiments of this application.

Optionally, an embodiment of this application further provides a communication apparatus (for example, the communication apparatus may be a chip or a chip system). The communication apparatus includes an interface circuit and a logic circuit, where the interface circuit is configured to obtain input information and/or output output information, and the logic circuit is configured to perform the method in any one of the foregoing method embodiments, and process and/or generate the output information based on the input information.

When the communication apparatus is configured to implement a function of the first network function entity in the foregoing method embodiments:
In some possible implementations, the input information includes first information, and the first information includes request information of a first task. Correspondingly, the processing based on the input information may be: determining at least one first node and a second task corresponding to each first node in the at least one first node.

In some possible implementations, the input information and the output information may include configuration information of a second task corresponding to at least one first node, the at least one first node includes the second access network device and/or the second terminal device, and the second terminal device is a terminal device served by the second access network device.

In some possible implementations, the input information may further include node capability information of at least one first node, where the node capability information indicates a task execution capability of the first node.

When the communication apparatus is configured to implement a function of the first terminal device in the foregoing method embodiments:

In some possible implementations, the output information may include first information, and the first information includes request information of a first task. The input information may include an execution result of at least one second task.

When the communication apparatus is configured to implement a function of the second terminal device in the foregoing method embodiments:

In some possible implementations, the input information may include configuration information of a second task corresponding to the second terminal device. The output information may include an execution result of the second task corresponding to the second terminal device.

When the communication apparatus is configured to implement a function of the second access network device in the foregoing method embodiments:
In some possible implementations, the input information may include second information, and the second information includes configuration information of a second task corresponding to the second terminal device. The output information may include the configuration information of the second task corresponding to the second terminal device.

When the communication apparatus is configured to implement a function of the first access network device in the foregoing method embodiments:
In some possible implementations, the input information may include first information, and the first information includes request information of a first task. The output information may include the first information.

In some possible implementations, the input information may include an execution result of a second task corresponding to at least one first node. The output information may include the execution result of the second task corresponding to the at least one first node. The at least one first node includes the second access network device and/or the second terminal device, and the second terminal device is a terminal device served by the second access network device.

Because the communication apparatus provided in this embodiment can perform the foregoing communication method, for a technical effect that can be obtained by the communication apparatus, refer to the foregoing method embodiments. Details are not described again herein.

According to the description of the foregoing implementations, a person skilled in the art may clearly understand that, for the purpose of convenient and brief description, division into the foregoing functional modules is merely used as an example for description. In actual application, the foregoing functions may be allocated to different functional modules for implementation based on a requirement. In other words, an inner structure of an apparatus is divided into different functional modules, to implement all or some of the functions described above.

In the several embodiments provided in this application, it should be understood that, the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one position, or may be distributed on a plurality of different positions. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like. In embodiments of this application, the computer may include the apparatus described above.

Although this application is described with reference to embodiments, in a process of implementing this application that claims protection, a person skilled in the art may understand and implement another variation of the disclosed embodiments by viewing the appended drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to produce a great effect.

Although this application is described with reference to specific features and all the embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to a first network function entity, and the method comprises:
receiving first information from a first terminal device, wherein the first information comprises request information of a first task; and
sending configuration information of at least one second task, wherein the second task is a subtask of the first task, the configuration information of the second task is for configuring an execution resource corresponding to the second task, and the second task corresponds to a first node.

2. The method according to claim 1, wherein the first terminal device is a terminal device served by a first access network device; and
the receiving first information from a first terminal device comprises:
receiving the first information from the first terminal device through the first access network device.

3. The method according to claim 1, wherein the method further comprises:
receiving an execution result of a second task corresponding to at least one first node from a second access network device, wherein the at least one first node comprises the second access network device and/or a second terminal device, and the second terminal device is a terminal device served by the second access network device; and
sending the execution result of the second task corresponding to the at least one first node to the first terminal device.

4. The method according to any one of claims 1 to 3, wherein the sending configuration information of at least one second task comprises:
sending the configuration information of the second task corresponding to the at least one first node to the second access network device, wherein the at least one first node comprises the second access network device and/or the second terminal device, and the second terminal device is a terminal device served by the second access network device.

5. The method according to any one of claims 1 to 4, wherein the sending configuration information of at least one second task comprises:
verifying validity of the first task; and
sending the configuration information of the at least one second task when the first task is valid.

6. The method according to any one of claims 1 to 5, wherein the method further comprises:
obtaining node capability information of at least one first node, wherein the node capability information indicates a task execution capability of the first node.

7. A communication method, wherein the method is applied to a first terminal device, and the method comprises:
sending first information to a first network function entity, wherein the first information comprises request information of a first task; and
receiving an execution result of at least one second task, wherein the second task is a subtask of the first task, and the second task corresponds to a first node.

8. The method according to claim 7, wherein the first terminal device is a terminal device served by a first access network device; and
the sending first information to a first network function entity comprises:
sending the first information to the first network function entity through the first access network device.

9. The method according to claim 8, wherein the first information is transmitted through one or more of the following: a task-type radio resource control RRC container, task-type non-access stratum NAS signaling, or a task-type signaling radio bearer SRB.

10. The method according to any one of claims 7 to 9, wherein the receiving an execution result of at least one second task comprises:
receiving the execution result of the second task corresponding to at least one first node from the first access network device, wherein the first node comprises a second access network device and/or a second terminal device, and the second terminal device is a terminal device served by the second access network device.

11. The method according to any one of claims 7 to 9, wherein the receiving an execution result of at least one second task comprises:
receiving, from a second terminal device, the execution result of the second task corresponding to the second terminal device.

12. The method according to claim 10 or 11, wherein the execution result of the second task is mapped to one of the following: a task-type packet data convergence protocol PDCP data protocol data unit, a task-type service data adaptation protocol SDAP data protocol data unit, a task-type data radio bearer DRB, or a task-type quality of service QoS flow.

13. The method according to claim 7, wherein the receiving an execution result of at least one second task comprises:
receiving the execution result of the at least one second task from the first network function entity.

14. A communication method, wherein the method is applied to a second terminal device, and the method comprises:
receiving configuration information of a second task corresponding to the second terminal device from a second access network device;
executing the second task corresponding to the second terminal device; and
sending an execution result of the second task corresponding to the second terminal device.

15. The method according to claim 14, wherein the configuration information of the second task corresponding to the second terminal device is transmitted through one or more of the following: a task-type radio resource control RRC container, task-type non-access stratum NAS signaling, or a task-type signaling radio bearer SRB.

16. The method according to claim 14 or 15, wherein the method further comprises:
receiving third information from the second access network device; and
determining a transmission link for the execution result of the second task corresponding to the second terminal device based on the third information.

17. The method according to claim 16, wherein the transmission link is a sidelink between the second terminal device and a first terminal device; and
the sending an execution result of the second task corresponding to the second terminal device comprises:
sending the execution result of the second task corresponding to the second terminal device to the first terminal device.

18. The method according to claim 16, wherein the transmission link is an air interface link between the second terminal device and the second access network device; and
the sending an execution result of the second task corresponding to the second terminal device comprises:
sending the execution result of the second task corresponding to the second terminal device to the second access network device.

19. The method according to any one of claims 16 to 18, wherein the execution result of the second task corresponding to the second terminal device is mapped to one of the following: a task-type packet data convergence protocol PDCP data protocol data unit, a task-type service data adaptation protocol SDAP data protocol data unit, a task-type data radio bearer DRB, or a task-type quality of service QoS flow.

20. A communication method, wherein the method is applied to a second access network device, and the method comprises:
receiving second information from a first network function entity, wherein the second information comprises configuration information of a second task corresponding to a second terminal device, and the configuration information of the second task is for configuring an execution resource corresponding to the second task; and
sending the configuration information of the second task corresponding to the second terminal device to the second terminal device.

21. The method according to claim 20, wherein the configuration information of the second task corresponding to the second terminal device is transmitted through one or more of the following: a task-type radio resource control RRC container, task-type non-access stratum NAS signaling, or a task-type signaling radio bearer SRB.

22. The method according to claim 20 or 21, wherein the method further comprises:
sending third information to the second terminal device, wherein the third information is for determining a transmission link for an execution result of the second task corresponding to the second terminal device.

23. The method according to claim 22, wherein the transmission link is a sidelink between the second terminal device and a first terminal device.

24. The method according to claim 22, wherein the transmission link is an air interface link between the second terminal device and the second access network device.

25. The method according to any one of claims 22 to 24, wherein the execution result of the second task corresponding to the second terminal device is mapped to one of the following: a task-type packet data convergence protocol PDCP data protocol data unit, a task-type service data adaptation protocol SDAP data protocol data unit, a task-type data radio bearer DRB, or a task-type quality of service QoS flow.

26. The method according to any one of claims 20 to 25, wherein the method further comprises:
receiving first information from the first terminal device, wherein the first information comprises request information of a first task, and the second task is a subtask of the first task; and
sending the first information to the first network function entity.

27. The method according to claim 26, wherein the first information is transmitted through one or more of the following: a radio resource control RRC container, non-access stratum NAS signaling, or a signaling radio bearer SRB.

28. The method according to any one of claims 20 to 27, wherein the second information further comprises configuration information of the second task corresponding to the second access network device.

29. A communication apparatus, wherein the communication apparatus comprises an interface circuit and a logic circuit, wherein
the interface circuit is configured to obtain input information and/or output output information; and
the logic circuit is configured to perform the method according to any one of claims 1 to 6, or perform the method according to any one of claims 7 to 13, or perform the method according to any one of claims 14 to 19, or perform the method according to any one of claims 20 to 28, and process and/or generate the output information based on the input information.

30. A computer-readable storage medium, configured to store instructions, wherein when the instructions are executed, the method according to any one of claims 1 to 6 is implemented, or the method according to any one of claims 7 to 13 is implemented, or the method according to any one of claims 14 to 19 is implemented, or the method according to any one of claims 20 to 28 is implemented.

31. A communication apparatus, wherein the communication apparatus comprises a processor, wherein
the processor is configured to execute computer-executable instructions stored in a memory, so that the method according to any one of claims 1 to 6 is implemented, or the method according to any one of claims 7 to 13 is implemented, or the method according to any one of claims 14 to 19 is implemented, or the method according to any one of claims 20 to 28 is implemented.

32. A computer program product, wherein when the computer program product runs on a communication apparatus, the method according to any one of claims 1 to 6 is implemented, or the method according to any one of claims 7 to 13 is implemented, or the method according to any one of claims 14 to 19 is implemented, or the method according to any one of claims 20 to 28 is implemented.
